# EUROPEAN PATENT SPECIFICATION

(11) **EP 4 569 801 B1**
(45) Date of publication and mention of the grant of the patent: **02.12.2026**
(21) Application number: 23801004.5
(22) Date of filing: 30.10.2023
(51) Int. Cl.: H04L 67/131, H04L 67/50, G06F 3/01, H04L 9/40, H04N 21/6437, H04W 12/03, H04L 65/65, H04L 69/16, H04L 69/22

(54) **SECURE USER INTERACTION DATA TRANSPORTATION USING ENCRYPTED REAL-TIME TRANSPORT PROTOCOL HEADER EXTENSION**
SICHERER BENUTZERINTERAKTIONSDATENTRANSPORT MIT VERSCHLÜSSELTER ECHTZEITTRANSPORTPROTOKOLLKOPFZEILENERWEITERUNG
TRANSPORT DE DONNÉES D'INTERACTION D'UTILISATEUR SÉCURISÉ À L'AIDE D'UNE EXTENSION D'EN-TÊTE DE PROTOCOLE DE TRANSPORT EN TEMPS RÉEL CHIFFRÉE

(30) Priority: 31.10.2022 US 202263420885 P
(43) Date of publication of application: 18.06.2025
(73) Proprietor: Lenovo (Singapore) Pte. Ltd., Singapore 556741 (SG)
(72) Inventor: STOICA, Razvan-Andrei, 45130 Essen (DE)
(74) Representative: Openshaw & Co.
(86) International application number: PCT/IB2023/060932
(87) International publication number: WO 2024/075092

(56) References cited:
- CN-A- 114 900 508
- US-A1- 2016 056 927
- JENNIFER MÜLLER ET AL: "Next-Generation Hybrid Broadcast Broadband Deliverable D4.1", 12 April 2012 (2012-04-12), XP055032125, Retrieved from the Internet <URL:http://www.hbb-next.eu/documents/HBB-NEXT_D4.1.pdf> [retrieved on 20120709]

## Description

### TECHNICAL FIELD

The present disclosure relates to wireless communications, and more specifically to transporting user interaction data using a real-time transport protocol (RTP) header.

### BACKGROUND

A wireless communications system may include one or multiple network communication devices, such as base stations, which may be otherwise known as an eNodeB (eNB), a next-generation NodeB (gNB), or other suitable terminology. Each network communication devices, such as a base station may support wireless communications for one or multiple user communication devices, which may be otherwise known as user equipment (UE), or other suitable terminology. The wireless communications system may support wireless communications with one or multiple user communication devices by utilizing resources of the wireless communication system (e.g., time resources (e.g., symbols, slots, subframes, frames, or the like) or frequency resources (e.g., subcarriers, carriers). Additionally, the wireless communications system may support wireless communications across various radio access technologies including third generation (3G) radio access technology, fourth generation (4G) radio access technology, fifth generation (5G) radio access technology, among other suitable radio access technologies beyond 5G (e.g., sixth generation (6G)).

An extended reality (XR) system may use the wireless communications system to communicate data between various devices. XR refers to any one or more of various types of realities, such as virtual reality (VR), augmented reality (AR), and mixed reality (MR). The data transmitted includes physical interaction data, which is data that describes a user's physical interactions in the physical world. Examples of physical interaction data include pose tracking data, hand gesture tracking data, eye tracking data, and so forth.

CN114900508A discloses a method for transmitting VR (Virtual Reality) application data based on webrtc, which comprises the steps of pre-expanding an RTP (Real-time Transport Protocol) header, and adding URI (Uniform Resource Identifier) in rtp_parameters.cc; an expansion type is added to rtp_rtcp_defines.h,

Jennifer Miiller et al, "Next-Generation Hybrid Broadcast Broadband Deliverable D4.1", HBB-NEXT Consortium 2012, discusses the state of the art in media synchronisation and cloud offloading, which are two objectives of the HBB-NEXT project.

### SUMMARY

The invention is defined by the appended independent claims. Preferred embodiments are covered by the appended dependent claims.

The present disclosure relates to methods, apparatuses, and systems that support user interaction data transportation using real-time transport protocol header extension. One or more physical device interactions by a user are sampled to obtain interaction data inputs, such as for a user playing cloud gaming or using XR on their UE. These interaction data inputs are generated frequently, such as approximately 250 to 1000 times per second. One or more interaction short messages (e.g., less than 100 bytes), which are time-sensitive, are generated from the user interaction data and included in one or more transport header extensions of an RTP data unit. The RTP data unit is transmitted to a remote device, such as a network entity. By transmitting the user interaction data in a header extension of an RTP data unit, the user interaction data can be transmitted to a remote device quickly along a time-critical path of the RTP, allowing the user interaction data to be transmitted to the remote device in a time-sensitive manner.

Some implementations of the method and apparatuses described herein may further include sampling one or more physical device interactions by a user to obtain interaction data corresponding to action inputs; generating one or more pose information elements from the interaction data; including the one or more pose information elements in one or more transport header extensions of a real-time transport protocol data unit corresponding to a payload of at least one media component; and transmitting, to a remote device, the real-time transport protocol data unit.

In some implementations of the method and apparatuses described herein, the method and apparatus further include causing the apparatus to encrypt the one or more transport header extensions using one or both of a transport layer security (TLS) procedure and a datagram transport layer security (DTLS) procedure. Additionally or alternatively, the apparatus comprises a UE. Additionally or alternatively, the method and apparatus further include generating, based at least in part on the one or more transport header extensions, a message authentication signature; and appending the message authentication signature to the real-time transport protocol data unit. Additionally or alternatively, the method and apparatus further include generating the one or more pose information elements based on an interaction data format syntax that includes one or more of a syntax protocol identifier, an interaction short message type, an interaction short message timestamp, an interaction short message raw data length, or an interaction short message raw data payload. Additionally or alternatively, the payload of the real-time transport protocol data unit contains no data. Additionally or alternatively, a frequency of generating pose information elements is based on a processing mode indicating one of a periodic interaction short message and an event-based interaction short message. Additionally or alternatively, the method and apparatus further include using an event threshold to determine to generate the one or more pose information elements when the processing mode indicates the event-based interaction short message.

Some implementations of the method and apparatuses described herein may further include receiving, from a UE, a real-time transport protocol data unit corresponding to a payload of at least one media component and one or more pose information elements included in one or more transport header extensions of the real-time transport protocol data unit; processing the one or more pose information elements to obtain a graphically rendered interaction and a graphical rendering output; and transmitting, to the UE, the graphical rendering output and the graphically rendered interaction.

In some implementations of the method and apparatuses described herein, the method and apparatus further include to determing the graphically rendered interaction data based in part at least on one or more of a syntax protocol identifier, an interaction short message type, an interaction short message timestamp, an interaction short message raw data length, or an interaction short message raw data payload comprised in each of one or more interaction short messages that include the pose information elements, and generating the graphical rendering output based on the graphically rendered interaction data. Additionally or alternatively, to determine the graphically rendered interaction data further comprises at least one of: a selection of one of the interaction short messages or an interpolation of the one or more interaction short messages. Additionally or alternatively, the method and apparatus further include receiving the interact data based at least in part on an out-of-band session description signaling determining a session configuration for reception of the real-time transport protocol data unit containing the one or more interaction data, and transmission of the graphically rendered interaction and the graphical rendering output. Additionally or alternatively, the method and apparatus further include decrypting the one or more transport header extensions using one or both of a TLS procedure and a DTLS procedure. Additionally or alternatively, the method and apparatus further include authenticating the one or more transport header extensions based at least in part on a message authentication signature appended to the real-time transport protocol data unit. Additionally or alternatively, the payload of the real-time transport protocol data unit contains no data.

### BRIEF DESCRIPTION OF THE DRAWINGS

FIG. 1 illustrates an example of a wireless communications system that supports user interaction data transportation using real-time transport protocol header extension in accordance with aspects of the present disclosure.
FIG. 2 illustrates an example of the RTP and real-time transport control protocol (RTCP) stack that supports user interaction data transportation using real-time transport protocol header extension in accordance with aspects of the present disclosure.
FIG. 3 illustrates an example of the web real-time communications (WebRTC) stack that supports user interaction data transportation using real-time transport protocol header extension in accordance with aspects of the present disclosure.
FIG. 4 illustrates the RTP and secure real-time transport protocol (SRTP) packet formats and header information that supports user interaction data transportation using real-time transport protocol header extension in accordance with aspects of the present disclosure.
FIG. 5 illustrates the RTP or SRTP header extension format and syntax that supports user interaction data transportation using real-time transport protocol header extension in accordance with aspects of the present disclosure.
FIG. 6 illustrates an example of RTP or SRTP header extension payload format for a generic interaction message that supports user interaction data transportation using real-time transport protocol header extension in accordance with aspects of the present disclosure.
FIG. 7 illustrates an example of RTP or SRTP header extension format for a generic interaction message that supports user interaction data transportation using real-time transport protocol header extension in accordance with aspects of the present disclosure.
FIG. 8 illustrates an example of a one-byte RTP or SRTP header extension format with an interaction message data element that supports user interaction data transportation using real-time transport protocol header extension in accordance with aspects of the present disclosure.
FIG. 9 illustrates an example of a two-byte RTP or SRTP header extension format with an interaction message data element that supports user interaction data transportation using real-time transport protocol header extension in accordance with aspects of the present disclosure.
FIG. 10 illustrates an example 1000 of a session description protocol (SDP) answer that supports user interaction data transportation using real-time transport protocol header extension in accordance with aspects of the present disclosure.
FIG. 11 illustrates an example 1100 of an SDP answer that supports user interaction data transportation using real-time transport protocol header extension in accordance with aspects of the present disclosure.
FIGs. 12 and 13 illustrate an example of a block diagram of a device that supports user interaction data transportation using real-time transport protocol header extension in accordance with aspects of the present disclosure.
FIGs. 14 through 18 illustrate flowcharts of methods that support user interaction data transportation using real-time transport protocol header extension in accordance with aspects of the present disclosure.

### DETAILED DESCRIPTION

Interactive communications imply various information flows carrying potentially time-sensitive inputs from one device to be transported over a network to a remote device. Interactive applications relying on such communications modes are becoming more and more popular with massive online games, cloud gaming, and XR. Such interaction real-time information flows contain inputs to a game engine, graphic engine or rendering engine that processes the information and returns reactions to the exciting inputs under some delay constraints. The format and syntax of such interaction information flows is mostly application dependent and in contradiction to established media formats (e.g., audio or video codecs) no mainstream encodings are established. Furthermore, such interactions evolve rapidly and require fast adaptation to new versions at a higher rate than typical conventional media codecs development cycles. A need thus exists for transporting over a network such information flows in a real time, flexible and encoding-/syntax-agnostic manner to provide application developers necessary modern tools for fast emerging and disruptive interactive applications.

Using the techniques discussed herein, one or more physical device interactions by a user are sampled to obtain interaction data inputs, such as for a user playing cloud gaming or using XR on their UE. These physical device interactions of a user are recorded or sampled by various sensors, and may include pose information, tracking of gaze and eye movement, tracking of the hand and identification of gestures, tracking of facial expression and identification of moods, or spatial tracking, AR anchoring or viewport descriptions. The interaction data inputs refer to data describing the physical device interactions. These interaction data inputs are generated frequently, such as approximately 250 to 1000 times per second.

One or more interaction short messages (e.g., less than 100 bytes), which are time-sensitive, are generated from the user interaction data and included in one or more transport header extensions of an RTP data unit. These interaction short messages refer to messages that include the data describing the physical device interactions. The RTP data unit is transmitted to a remote device, such as a network entity. The network entity processes the received interaction short messages, which may include communicating the data in the received interaction short messages to one or more other network entities or cloud-based services, resulting in an interaction response that the network entity transmits to the UE. The interaction response refers to some action to take (e.g., feedback the UE is to take, such as a change in what is displayed to a user by the UE).

By transmitting the user interaction data in a header extension of an RTP data unit, the user interaction data can be transmitted to a remote device quickly along a time-critical path of the RTP, allowing the user interaction data to be transmitted to the remote device in a time-sensitive manner. The techniques discussed herein allow the interaction data inputs to be communicated in a header extension in a time-critical path (e.g., of a WebRTC stack), allowing the interaction data inputs to be communicated to the network device more reliably and quickly than can be achieved using a not time-critical path (e.g., of a WebRTC data channels stack). Furthermore, the header extension transport mechanisms discussed herein equally apply to both the RTP protocol and its secured version, the SRTP protocol, albeit in some implementations and examples they are referred to in the context of either RTP or SRTP.

Furthermore, typically to transmit data in the time-critical path of the WebRTC stack, a profile describing exactly what the payload looks like needs to be defined (e.g., so that a decoder at the receiver can make sense of the payload), reviewed by the Internet Engineering Task Force (IETF), and incorporated into a proposed standard. By including the interaction data input in a header extension of the RTP rather than in the payload of the RTP, the time-consuming process of getting approval for the profile and incorporation of the profile into a standard can be avoided.

Aspects of the present disclosure are described in the context of a wireless communications system. Aspects of the present disclosure are further illustrated and described with reference to device diagrams and flowcharts.

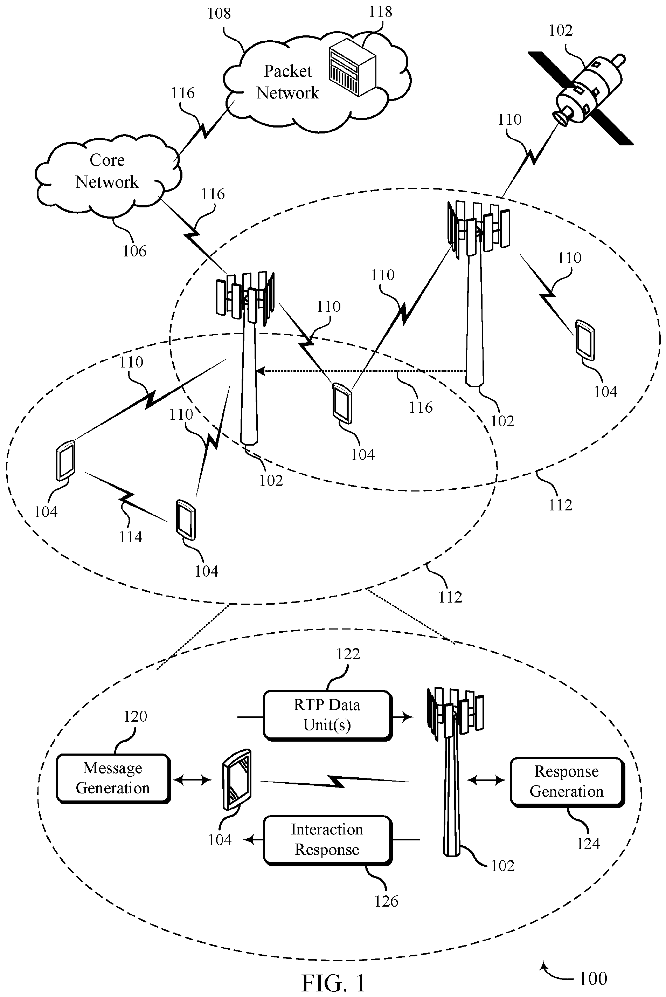

FIG. 1 illustrates an example of a wireless communications system 100 that supports user interaction data transportation using real-time transport protocol header extension in accordance with aspects of the present disclosure. The wireless communications system 100 may include one or more network entities 102, one or more UEs 104, a core network 106, and a packet data network 108. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a 5G network, such as an NR network. In other implementations, the wireless communications system 100 may be a combination of a 4G network and a 5G network, or other suitable radio access technology including Institute of Electrical and Electronics Engineers (IEEE) 802.11 (Wi-Fi), IEEE 802.16 (WiMAX), IEEE 802.20. The wireless communications system 100 may support radio access technologies beyond 5G. Additionally, the wireless communications system 100 may support technologies, such as time division multiple access (TDMA), frequency division multiple access (FDMA), or code division multiple access (CDMA), etc.

The one or more network entities 102 may be dispersed throughout a geographic region to form the wireless communications system 100. One or more of the network entities 102 described herein may be or include or may be referred to as a network node, a base station, a network element, a radio access network (RAN), a base transceiver station, an access point, a NodeB, an eNodeB (eNB), a next-generation NodeB (gNB), or other suitable terminology. A network entity 102 and a UE 104 may communicate via a communication link 110, which may be a wireless or wired connection. For example, a network entity 102 and a UE 104 may perform wireless communication (e.g., receive signaling, transmit signaling) over a Uu interface.

A network entity 102 may provide a geographic coverage area 112 for which the network entity 102 may support services (e.g., voice, video, packet data, messaging, broadcast, etc.) for one or more UEs 104 within the geographic coverage area 112. For example, a network entity 102 and a UE 104 may support wireless communication of signals related to services (e.g., voice, video, packet data, messaging, broadcast, etc.) according to one or multiple radio access technologies. In some implementations, a network entity 102 may be moveable, for example, a satellite associated with a non-terrestrial network. In some implementations, different geographic coverage areas 112 associated with the same or different radio access technologies may overlap, but the different geographic coverage areas 112 may be associated with different network entities 102. Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The one or more UEs 104 may be dispersed throughout a geographic region of the wireless communications system 100. A UE 104 may include or may be referred to as a mobile device, a wireless device, a remote device, a remote unit, a handheld device, or a subscriber device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or machine-type communication (MTC) device, among other examples. In some implementations, a UE 104 may be stationary in the wireless communications system 100. In some other implementations, a UE 104 may be mobile in the wireless communications system 100.

The one or more UEs 104 may be devices in different forms or having different capabilities. Some examples of UEs 104 are illustrated in FIG. 1. A UE 104 may be capable of communicating with various types of devices, such as the network entities 102, other UEs 104, or network equipment (e.g., the core network 106, the packet data network 108, a relay device, an integrated access and backhaul (IAB) node, or another network equipment), as shown in FIG. 1. Additionally, or alternatively, a UE 104 may support communication with other network entities 102 or UEs 104, which may act as relays in the wireless communications system 100.

A UE 104 may also be able to support wireless communication directly with other UEs 104 over a communication link 114. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link 114 may be referred to as a sidelink. For example, a UE 104 may support wireless communication directly with another UE 104 over a PC5 interface.

A network entity 102 may support communications with the core network 106, or with another network entity 102, or both. For example, a network entity 102 may interface with the core network 106 through one or more backhaul links 116 (e.g., via an S1, N2, N6, or another network interface). The network entities 102 may communicate with each other over the backhaul links 116 (e.g., via an X2, Xn, or another network interface). In some implementations, the network entities 102 may communicate with each other directly (e.g., between the network entities 102). In some other implementations, the network entities 102 may communicate with each other or indirectly (e.g., via the core network 106). In some implementations, one or more network entities 102 may include subcomponents, such as an access network entity, which may be an example of an access node controller (ANC). An ANC may communicate with the one or more UEs 104 through one or more other access network transmission entities, which may be referred to as a radio heads, smart radio heads, or transmission-reception points (TRPs).

In some implementations, a network entity 102 may be configured in a disaggregated architecture, which may be configured to utilize a protocol stack physically or logically distributed among two or more network entities 102, such as an integrated access backhaul (IAB) network, an open RAN (O-RAN) (e.g., a network configuration sponsored by the O-RAN Alliance), or a virtualized RAN (vRAN) (e.g., a cloud RAN (C-RAN)). For example, a network entity 102 may include one or more of a central unit (CU), a distributed unit (DU), a radio unit (RU), a RAN Intelligent Controller (RIC) (e.g., a Near-Real Time RIC (Near-RT RIC), a Non-Real Time RIC (Non-RT RIC)), a Service Management and Orchestration (SMO) system, or any combination thereof.

An RU may also be referred to as a radio head, a smart radio head, a remote radio head (RRH), a remote radio unit (RRU), or a transmission reception point (TRP). One or more components of the network entities 102 in a disaggregated RAN architecture may be co-located, or one or more components of the network entities 102 may be located in distributed locations (e.g., separate physical locations). In some implementations, one or more network entities 102 of a disaggregated RAN architecture may be implemented as virtual units (e.g., a virtual CU (VCU), a virtual DU (VDU), a virtual RU (VRU)).

Split of functionality between a CU, a DU, and an RU may be flexible and may support different functionalities depending upon which functions (e.g., network layer functions, protocol layer functions, baseband functions, radio frequency functions, and any combinations thereof) are performed at a CU, a DU, or an RU. For example, a functional split of a protocol stack may be employed between a CU and a DU such that the CU may support one or more layers of the protocol stack and the DU may support one or more different layers of the protocol stack. In some implementations, the CU may host upper protocol layer (e.g., a layer 3 (L3), a layer 2 (L2)) functionality and signaling (e.g., Radio Resource Control (RRC), service data adaption protocol (SDAP), Packet Data Convergence Protocol (PDCP)). The CU may be connected to one or more DUs or RUs, and the one or more DUs or RUs may host lower protocol layers, such as a layer 1 (L1) (e.g., physical (PHY) layer) or an L2 (e.g., radio link control (RLC) layer, medium access control (MAC) layer) functionality and signaling, and may each be at least partially controlled by the CU.

Additionally, or alternatively, a functional split of the protocol stack may be employed between a DU and an RU such that the DU may support one or more layers of the protocol stack and the RU may support one or more different layers of the protocol stack. The DU may support one or multiple different cells (e.g., via one or more RUs). In some implementations, a functional split between a CU and a DU, or between a DU and an RU may be within a protocol layer (e.g., some functions for a protocol layer may be performed by one of a CU, a DU, or an RU, while other functions of the protocol layer are performed by a different one of the CU, the DU, or the RU).

A CU may be functionally split further into CU control plane (CU-CP) and CU user plane (CU-UP) functions. A CU may be connected to one or more DUs via a midhaul communication link (e.g., F1, F1-c, F1-u), and a DU may be connected to one or more RUs via a fronthaul communication link (e.g., open fronthaul (FH) interface). In some implementations, a midhaul communication link or a fronthaul communication link may be implemented in accordance with an interface (e.g., a channel) between layers of a protocol stack supported by respective network entities 102 that are in communication via such communication links.

The core network 106 may support user authentication, access authorization, tracking, connectivity, and other access, routing, or mobility functions. The core network 106 may be an evolved packet core (EPC), or a 5G core (5GC), which may include a control plane entity that manages access and mobility (e.g., a mobility management entity (MME), an access and mobility management functions (AMF)) and a user plane entity that routes packets or interconnects to external networks (e.g., a serving gateway (S-GW), a Packet Data Network (PDN) gateway (P-GW), or a user plane function (UPF)). In some implementations, the control plane entity may manage non-access stratum (NAS) functions, such as mobility, authentication, and bearer management (e.g., data bearers, signal bearers, etc.) for the one or more UEs 104 served by the one or more network entities 102 associated with the core network 106.

The core network 106 may communicate with the packet data network 108 over one or more backhaul links 116 (e.g., via an S1, N2, N6, or another network interface). The packet data network 108 may include an application server 118. In some implementations, one or more UEs 104 may communicate with the application server 118. A UE 104 may establish a session (e.g., a protocol data unit (PDU) session, or the like) with the core network 106 via a network entity 102. The core network 106 may route traffic (e.g., control information, data, and the like) between the UE 104 and the application server 118 using the established session (e.g., the established PDU session). The PDU session may be an example of a logical connection between the UE 104 and the core network 106 (e.g., one or more network functions of the core network 106).

In the wireless communications system 100, the network entities 102 and the UEs 104 may use resources of the wireless communication system 100 (e.g., time resources (e.g., symbols, slots, subframes, frames, or the like) or frequency resources (e.g., subcarriers, carriers) to perform various operations (e.g., wireless communications). In some implementations, the network entities 102 and the UEs 104 may support different resource structures. For example, the network entities 102 and the UEs 104 may support different frame structures. In some implementations, such as in 4G, the network entities 102 and the UEs 104 may support a single frame structure. In some other implementations, such as in 5G and among other suitable radio access technologies, the network entities 102 and the UEs 104 may support various frame structures (i.e., multiple frame structures). The network entities 102 and the UEs 104 may support various frame structures based on one or more numerologies.

One or more numerologies may be supported in the wireless communications system 100, and a numerology may include a subcarrier spacing and a cyclic prefix. A first numerology (e.g., *µ*=0) may be associated with a first subcarrier spacing (e.g., 15 kHz) and a normal cyclic prefix. The first numerology (e.g., *µ*=0) associated with the first subcarrier spacing (e.g., 15 kHz) may utilize one slot per subframe. A second numerology (e.g., *µ*=1) may be associated with a second subcarrier spacing (e.g., 30 kHz) and a normal cyclic prefix. A third numerology (e.g., *µ*=2) may be associated with a third subcarrier spacing (e.g., 60 kHz) and a normal cyclic prefix or an extended cyclic prefix. A fourth numerology (e.g., *µ*=3) may be associated with a fourth subcarrier spacing (e.g., 120 kHz) and a normal cyclic prefix. A fifth numerology (e.g., *µ*=4) may be associated with a fifth subcarrier spacing (e.g., 240 kHz) and a normal cyclic prefix.

A time interval of a resource (e.g., a communication resource) may be organized according to frames (also referred to as radio frames). Each frame may have a duration, for example, a 10 millisecond (ms) duration. In some implementations, each frame may include multiple subframes. For example, each frame may include 10 subframes, and each subframe may have a duration, for example, a 1 ms duration. In some implementations, each frame may have the same duration. In some implementations, each subframe of a frame may have the same duration.

Additionally or alternatively, a time interval of a resource (e.g., a communication resource) may be organized according to slots. For example, a subframe may include a number (e.g., quantity) of slots. Each slot may include a number (e.g., quantity) of symbols (e.g., orthogonal frequency division multiplexing (OFDM) symbols). In some implementations, the number (e.g., quantity) of slots for a subframe may depend on a numerology. For a normal cyclic prefix, a slot may include 14 symbols. For an extended cyclic prefix (e.g., applicable for 60 kHz subcarrier spacing), a slot may include 12 symbols. The relationship between the number of symbols per slot, the number of slots per subframe, and the number of slots per frame for a normal cyclic prefix and an extended cyclic prefix may depend on a numerology. It should be understood that reference to a first numerology (e.g., *µ*=0) associated with a first subcarrier spacing (e.g., 15 kHz) may be used interchangeably between subframes and slots.

In the wireless communications system 100, an electromagnetic (EM) spectrum may be split, based on frequency or wavelength, into various classes, frequency bands, frequency channels, etc. By way of example, the wireless communications system 100 may support one or multiple operating frequency bands, such as frequency range designations FR1 (410 MHz - 7.125 GHz), FR2 (24.25 GHz - 52.6 GHz), FR3 (7.125 GHz - 24.25 GHz), FR4 (52.6 GHz - 114.25 GHz), FR4a or FR4-1 (52.6 GHz - 71 GHz), and FR5 (114.25 GHz - 300 GHz). In some implementations, the network entities 102 and the UEs 104 may perform wireless communications over one or more of the operating frequency bands. In some implementations, FR1 may be used by the network entities 102 and the UEs 104, among other equipment or devices for cellular communications traffic (e.g., control information, data). In some implementations, FR2 may be used by the network entities 102 and the UEs 104, among other equipment or devices for short-range, high data rate capabilities.

FR1 may be associated with one or multiple numerologies (e.g., at least three numerologies). For example, FR1 may be associated with a first numerology (e.g., *µ*=0), which includes 15 kHz subcarrier spacing; a second numerology (e.g., *µ*=1), which includes 30 kHz subcarrier spacing; and a third numerology (e.g., *µ*=2), which includes 60 kHz subcarrier spacing. FR2 may be associated with one or multiple numerologies (e.g., at least 2 numerologies). For example, FR2 may be associated with a third numerology (e.g., *µ*=2), which includes 60 kHz subcarrier spacing; and a fourth numerology (e.g., *µ*=3), which includes 120 kHz subcarrier spacing.

The techniques discussed herein support transmission of interaction short messages from one apparatus or device to another apparatus or device. For example, a UE 104 samples one or more interactions of a user (e.g., interactions with the UE 104) to obtain interaction data inputs. Message generation 120 at the UE 104 generates one or more interaction short messages from the interaction data inputs, which are included in one or more transport header extensions (also referred to as simply header extensions) of a real-time transport protocol (RTP) data unit. These RTP data unit(s) are transmitted to the network entity as RTP data unit(s) 122. In one or more implementations, at least a portion of each RTP data unit 122 is encrypted, such as using one or both of a transport layer security (TLS) procedure and a datagram transport layer security (DTLS) procedure. The network entity 102 is then able to decrypt the encrypted portion of the RTP data unit 122. Additionally or alternatively, a message authentication signature, generated based at least in part on the one or more transport header extensions, is appended to each RTP data unit 122. The network entity 102 is then able to verify that the one or more transport header extensions have not been modified.

Response generation 124 at the network entity 102, aggregating the network elements distributed processing up to the application server 118, processes the one or more interaction short messages in the received RTP data unit(s) 122 and, based on this processing, generates a response to the interaction identified in the one or more interaction short messages. This network entity 102 transmits this response to the UE 104 as an interaction response 126.

As discussed in more detail below, the interaction data inputs are small-size (e.g., up to 100 bytes) real-time interaction data specific to interactive applications (e.g., XR or cloud gaming (CG)) and the interaction short messages are transported over RTP header extension elements as standalone or together with other header extension elements. The header extension elements transporting the interaction data are optionally authenticated, encrypted, or both authenticated and encrypted.

The term extended Reality (XR) is used as an umbrella term for different types of realities, including virtual reality (VR), augmented reality (AR), and mixed reality (MR). VR is a rendered version of a delivered visual and audio scene. The rendering is in this case designed to mimic the visual and audio sensory stimuli of the real world as naturally as possible to an observer or user as they move within the limits defined by the application. Virtual reality usually, but not necessarily, requires a user to wear a head mounted display (HMD), to completely replace the user's field of view with a simulated visual component, and to wear headphones, to provide the user with the accompanying audio. Some form of head and motion tracking of the user in VR is usually also used to allow the simulated visual and audio components to be updated to ensure that, from the user's perspective, items and sound sources remain consistent with the user's movements. In some implementations additional means to interact with the virtual reality simulation may be provided.

AR is when a user is provided with additional information or artificially generated items, or content overlaid upon their current environment. Such additional information or content will usually be visual and/or audible and their observation of their current environment may be direct, with no intermediate sensing, processing, and rendering, or indirect, where their perception of their environment is relayed via sensors and may be enhanced or processed.

MR is an advanced form of AR where some virtual elements are inserted into the physical scene with the intent to provide the illusion that these elements are part of the real scene.

XR refers to all real-and-virtual combined environments and human-machine interactions generated by computer technology and wearables. It includes representative forms such as AR, MR and VR and the areas interpolated among them. The levels of virtuality range from partially sensory inputs to fully immersive VR. A key aspect of XR is the extension of human experiences especially relating to the senses of existence (represented by VR) and the acquisition of cognition (represented by AR)."

Central to the success of an immersive XR experience are the interaction and spatial computing associated with an XR application activity. This applies similarly to other mainstream interaction-driven applications, such as CG. The interaction data and associated spatial computing determining the XR rendering engine or CG gaming engine responses to the user physical inputs contribute thus to cyber-physical illusion of immersiveness between the physical and virtual worlds.

In one or more implementations, the data associated with the user interaction events has one or more of the following characteristics: 1) low data footprint of usually up to about 100 bytes per message (thus, the messages are also referred to as short messages or interaction short messages); 2) high sampling rates within the 250 hertz (Hz) - 1000 Hz range; 3) data can trigger a response with low-latency requirements (e.g., up to 1 second end-to-end from the interaction to the response as perceived by the user); 4) can be synchronized to other media streams (e.g., video or audio media stream); 5) can be synchronized to other interaction data; 6) reliability is optional as determined by individual application requirements; 7) data encoding follows usually proprietary/non-standardized or rapidly evolving application- and interaction-dependent formats; 8) carries privacy sensitive interaction events and data such as user viewport description, user pose/orientation tracking data (up to 6 degrees of freedom (DoF)), user gesture tracking data, user body tracking data, user facial expression tracking data, user eye tracking data, user action tracking data, application and AR anchor data and description, and so forth.

In some situations this data is transported over networks preponderantly over WebRTC data channels or similar solutions. However, the WebRTC data channels do not cater for time-sensitive transport means relying on the stream control transmission protocol (SCTP), and as such real-time transport solutions are desirable.

The traffic of immersive and interactive real-time applications as the ones described above use real-time suited transport architectures and protocols. As part of the latter, one is the real-time transport protocol (RTP), its securely provisioned SRTP, and its web-targeted stack web real-time communications (WebRTC), respectively.

RTP is a media codec agnostic network protocol with application-layer framing used to deliver multimedia (e.g., audio, video, etc.) data in real-time over Internet protocol (IP) networks. It is used in conjunction with a sister protocol for control, i.e., RTCP, to provide end-to-end features such as jitter compensation, packet loss and out-of-order delivery detection, synchronization and source streams multiplexing.

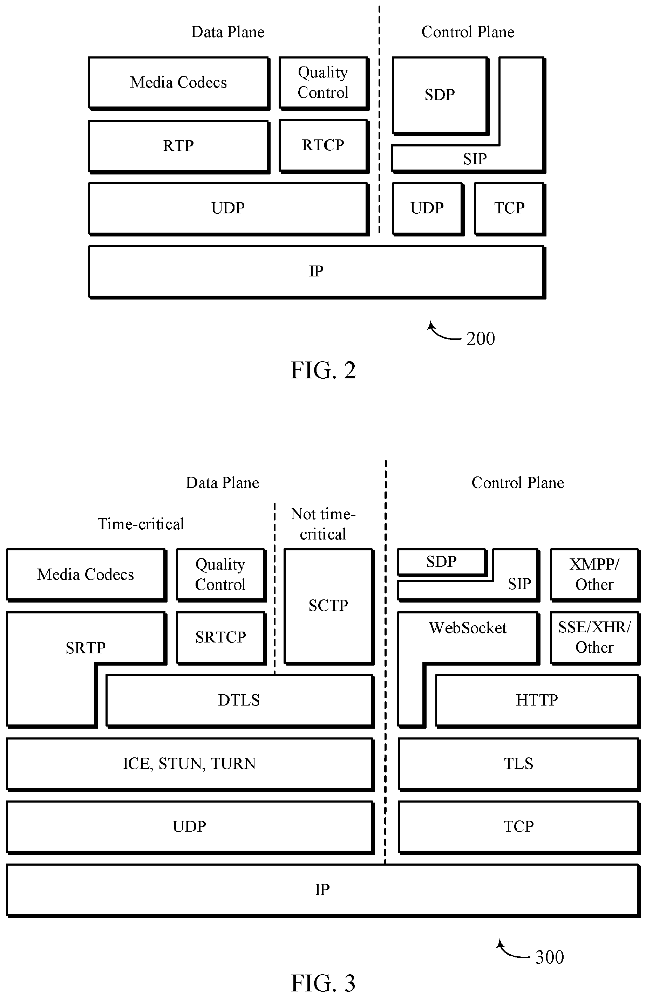

FIG. 2 illustrates an example of the RTP and RTCP stack 200 that supports user interaction data transportation using real-time transport protocol header extension in accordance with aspects of the present disclosure. The stack 200 is the RTP and RTCP protocol stack over IP networks.

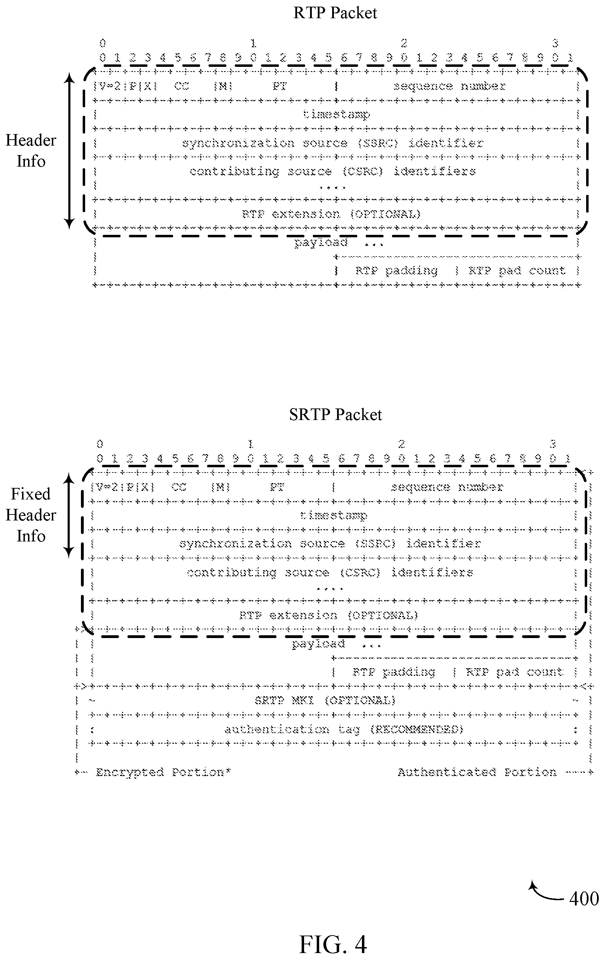

SRTP is a secured version of RTP, providing encryption (mainly by means of payload confidentiality), message authentication and integrity protection (by means of PDU, e.g., headers and payload, signing), as well as replay attack protection. Similarly to RTP, the SRTP sister protocol is secure real-time control protocol (SRTCP). This provides the same functions to its RTCP counterpart. As such, in vanilla SRTP versions, the RTP header information is still accessible but non-modifiable, whereas the payload is encrypted. These security provisions are illustrated in part over the bottom part of FIG. 4 below. Furthermore, the key exchange and additional security parameters necessary to use SRTP are based upon the datagram transport layer security (DTLS) key exchange procedure. SRTP is used for these reasons as the transport protocol for media in the WebRTC stack which ensures secure real-time communications (RTC) multimedia communications over web browser interfaces.

FIG. 3 illustrates an example of the WebRTC stack 300 that supports user interaction data transportation using real-time transport protocol header extension in accordance with aspects of the present disclosure. The stack 300 is the WebRTC (SRTP) protocol stack over IP networks. As illustrated, an IP layer carries signaling from the data plane and the control plane. The data plane stack comprises functions for user datagram protocol (UDP), interactive connectivity establishment (ICE), datagram transport layer security (DTLS), SRTP, SRTCP, media codecs, quality control and SCTP. ICE may use the session traversal utilities for NAT (STUN) protocol and traversal using relays around NAT (TURN) to address real-time media content delivery across heterogeneous networks and NAT rules and firewalls. The SCTP data plane is mainly dedicated as an application data channel and may be non time critical, whereas the SRTP based stack including elements of control, i.e., SRTCP, encoding, i.e., media codecs, and quality of service (QoS), i.e., quality control, is dedicated to time-critical transport.

FIG. 4 illustrates the RTP and SRTP packet formats and header information 400 that supports user interaction data transportation using real-time transport protocol header extension in accordance with aspects of the present disclosure. The RTP and SRTP header information share the same format as illustrated in FIG. 4.

The individual fixed header information and complete header information (including header extensions) is briefly summarized for the RTP/SRTP packets as follows. The fixed header information includes V, P, X, CC, M, PT, sequence number, timestamp, synchronization source (SSRC) identifier, and contributing source identifier (CSRC). V is 2 bits indicating the protocol version used. P is a 1 bit field indicating that one or more zero-padded octets at the end of the payload are present, whereby, among others, the padding may be used for fixed-sized encrypted blocks or for carrying multiple RTP/SRTP packets over lower layer protocols. X is 1 bit indicating that the standard fixed RTP/SRTP header will be followed by an RTP header extension usually associated with a particular data/profile that will carry more information about the data (e.g., the frame marking RTP header extension for video data, or generic RTP header extensions such as the RTP/SRTP extended protocol). CC is 4 bits indicating number of contributing media sources (CSRC) that follow the fixed header

M is 1 bit intended to mark an information frame boundaries in the packet stream, whose behavior is exactly specified by RTP profiles (e.g., H.264, H.265, H.266, AV1, etc.). PT is 7 bits indicating the payload type, which in case of video profiles is dynamic and negotiated by means of SDP (e.g., 96 for H.264, 97 for H.265, 98 for AV1, etc.). Sequence number is 16 bits indicating the sequence number which increments by one with each RTP data packet sent over a session. Timestamp is 32 bits indicating timestamp in ticks of the payload type clock reflecting the sampling instant of the first octet of the RTP data packet (associated for video stream with a video frame), whereas the first timestamp of the first RTP packet is selected at random. SSRC identifier is 32 bits indicating a random identifier for the source of a stream of RTP packets forming a part of the same timing and sequence number space, such that a receiver may group packets based on synchronization source for playback. CSRC identifier is a list of up to 16 CSRC items of 32 bits each given the amount of CSRC mixed by RTP mixers within the current payload as signaled by the CC bits; the list identifies the contributing sources for the payload contained in this packet given the SSRC identifiers of the contributing sources.

The complete header information includes RTP header extension. RTP header extension is a variable length field present if the X bit is marked; the header extension is appended to the RTP fixed header information after the CSRC list if present; and the RTP header extension is 32-bit aligned and formed of the following fields: 1) a 16-bit extension identifier defined by a profile and usually negotiated and determined via the SDP signaling mechanism; 2) a 16-bit length field describing the extension header length in 32-bits multiples excluding the first 32 bits corresponding to the 16 bits extension identifier and the 16 bits length fields itself; and 3) a 32-bit aligned header extension raw data field formatted according to some RTP header extension identifier specified format.

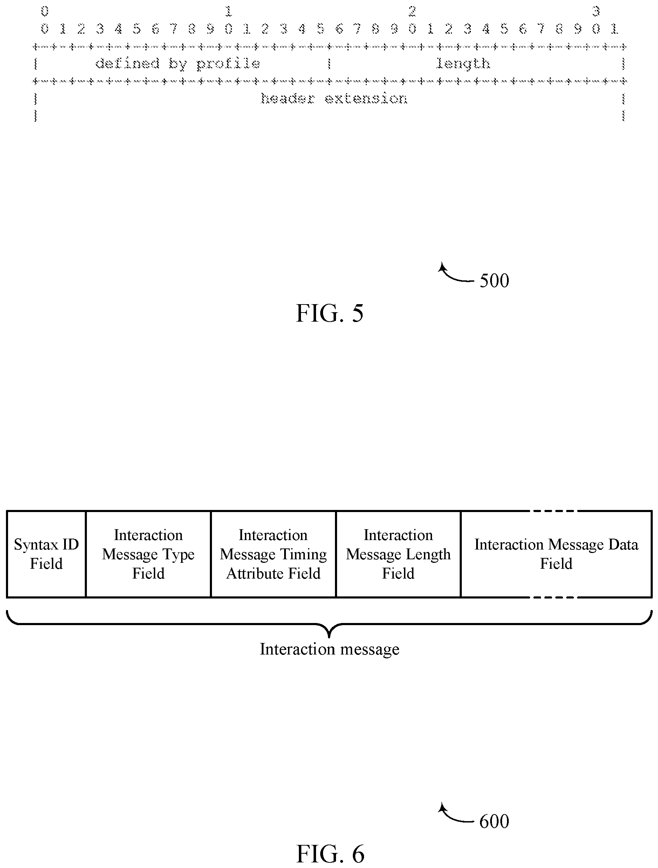

FIG. 5 illustrates the RTP or SRTP header extension format and syntax 500 that supports user interaction data transportation using real-time transport protocol header extension in accordance with aspects of the present disclosure. The RTP header extension format and syntax are like the ones of SRTP. In addition, in both RTP and SRTP only one RTP extension header may be appended to the fixed header information. However, for both RTP and SRTP extensions to the base protocols exist to allow for multiple RTP header extensions of predetermined types to be appended to the fixed header information of the protocols.

In one or more implementations, RTP header extensions produced at the source may be ignored by the destination endpoints that do not have the knowledge to interpret and process the RTP header extensions transmitted by the source endpoint.

The techniques discussed herein use the SRTP header extensions as a mechanism to transport real-time interaction data pertaining to emerging interactive and immersive applications in the context of XR, CG or alike applications categories. Concretely, the techniques discussed herein solution uses the SRTP protocol with the generic framework of header extensions, and furthermore, the secure provisions of encryption of header extensions in the SRTP protocol to provide additional encryption to the header extensions enclosing interaction data. As such, the proposed solution creates a customizable, light-weight transport subprotocol over SRTP extension headers that is agnostically extensible to transporting any data formats and syntax according to some predetermined extension header profile during the SDP setup of the SRTP connection. Notably, the same mechanism can also be used in the context of WebRTC where SRTP is the underlying transport protocol for media and time-sensitive data.

In one or more implementations, user physical interactions in the physical world are translated by XR, CG devices to the virtual domain. To this end physical device interactions, which are user physical interactions with an XR, CG or alike device, are recorded by many embedded sensors which sample the physical excitations and process further the measurements at high rates. In some implementations such physical interactions may imply one or more of sampling of pose information, tracking of gaze and eye movement, tracking of the hand and identification of gestures, tracking of facial expression and identification of moods, spatial tracking, AR anchoring or viewport descriptions, and so forth. All the latter are represented in current systems by various data encodings of up to 100 bytes on average.

In one or more implementations this data is generated periodically by the sensor devices coupled to a processor up to rate of 250 Hz (e.g., 250 times per second). Additionally or alternatively, the output frequency attains up to 1000 Hz (e.g., 1000 times per second). Additionally or alternatively, the sensor devices and the processor coupled together generate events of interaction data, e.g., pointer detection on a virtual object, head nodding or field of view change, focusing of an element within a viewport, and so forth. In such situations, the events are determined by the processor applying a threshold to the sampled sensor data to determine whether an event trigger condition is met or not. Upon reaching a triggering condition, the processor creates the interaction data event. In such situations generating the interaction short messages discussed herein is also referred to as event-based.

As the interaction data syntax may differ from implementation to implementation, and from application to application, respectively, a generic syntax for the data of interaction messages is supported. In one or more implementations, the data format of an interaction message includes at least in part the following successive elements, a syntax identifier (ID) field, an interaction message type field, an interaction message timing attribute field, an interaction message raw data length field, and an interaction message raw data payload field. The syntax identifier field may be of fixed length (e.g., 8 bits) and signals the format of the raw interaction data payload enclosed in an RTP extension header.

The interaction message type field may be of fixed length and determines the type of the message from a dictionary of possible types corresponding to a syntax identifier. E.g., in one or more implementations a syntax identifier may have L possible message types - pose tracking, head tracking, hand tracking, gesture detection, etc., and as such the length of this field is of at least log₂(L) bits.

The interaction message timing attribute field may be of fixed length (e.g., 16 bits) and determines a fine-tuning timing element for fine synchronization of the interaction message content relative to the RTP timestamp associated with the media payload type carrying the RTP extension header with the interaction data. E.g., in one or more implementations this field may encode a signed 16-bit time duration in milliseconds relative to the RTP timestamp for synchronization, whereas in one or more implementations a value of 0 for such a timing attribute field would imply no fine synchronization is used and the RTP timestamp shall be used for any further synchronization purposes.

The interaction message raw data length field may be fixed length (e.g., 8 bits) and signals the amount of bytes of interaction message raw data will follow.

The interaction message raw data payload field may be variable length and contains the encoded interaction information according to the format determined by syntax identifier field indication. The length of this field may be determined in one or more implementations by the indication provided by the interaction message raw data length field preceding it.

FIG. 6 illustrates an example of RTP or SRTP header extension payload format for a generic interaction message 600 that supports user interaction data transportation using real-time transport protocol header extension in accordance with aspects of the present disclosure. The interaction message 600 of FIG. 6 illustrates the basic elements of a generic interaction message as the data of an RTP header extension.

In one or more implementations, the basic elements of the interaction message described above and illustrated in FIG. 6 are byte-aligned. As a result, in one or more implementations padding may be appended at the end of the interaction message raw data payload to ensure a particular bit alignment (e.g., 32-bit alignment corresponding to the RTP header extension), as shown also in FIG. 6.

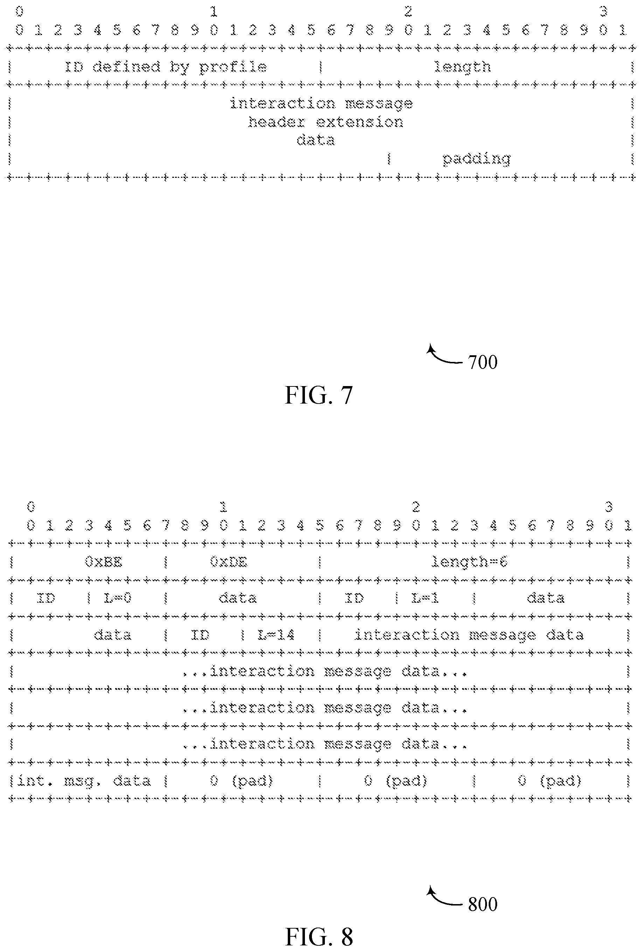

FIG. 7 illustrates an example of RTP or SRTP header extension format for a generic interaction message 700 that supports user interaction data transportation using real-time transport protocol header extension in accordance with aspects of the present disclosure. The interaction message 700 illustrates a complete RTP header extension representation including the RTP header extension profile determined identifier and length.

In one or more implementations, the RTP header extension format of FIG. 7 may be sufficient. Additionally or alternatively, other RTP header extensions are transmitted by a source device simultaneously with the interaction message data. In such situations, the generic RTP header extensions formatting (e.g., as discussed in IETF Request for Comments (RFC) 8285, "A General Mechanism for RTP Header Extensions," October 2017) is used to allow for additional extension elements to be signaled along the interaction message data within an RTP header extension.

In one or more implementations, for very short interaction data messages with lengths up to 16 bytes, the one-byte extension format of the generic RTP header extension mechanism of can be used. This allows the multiplexing of other header extension elements together with the interaction data over the same RTP/SRTP protocol data unit (PDU).

FIG. 8 illustrates an example 800 of a one-byte RTP or SRTP header extension format with an interaction message data element that supports user interaction data transportation using real-time transport protocol header extension in accordance with aspects of the present disclosure. The example 800 implements the one-byte extension format and the previously described basic interaction message payload as one of the RTP header extension elements. In the example 800, the interaction message data of 15 bytes size is transported over a one-byte generic RTP header extension mechanism (identified by profile ID 0xBEDE) with overall length of 12 words. The interaction message data is the last RTP header extension element in succession of other two extension elements. The RTP header extension is additionally padded with 3 bytes ensuring the RTP header extension 32-bit alignment.

In one or more implementations, for longer short interaction data messages with lengths up to 256 bytes, the two-byte extension format of the generic RTP header extension mechanism can be used. This also allows the multiplexing of header extension elements together with the interaction data over the same RTP/SRTP PDU.

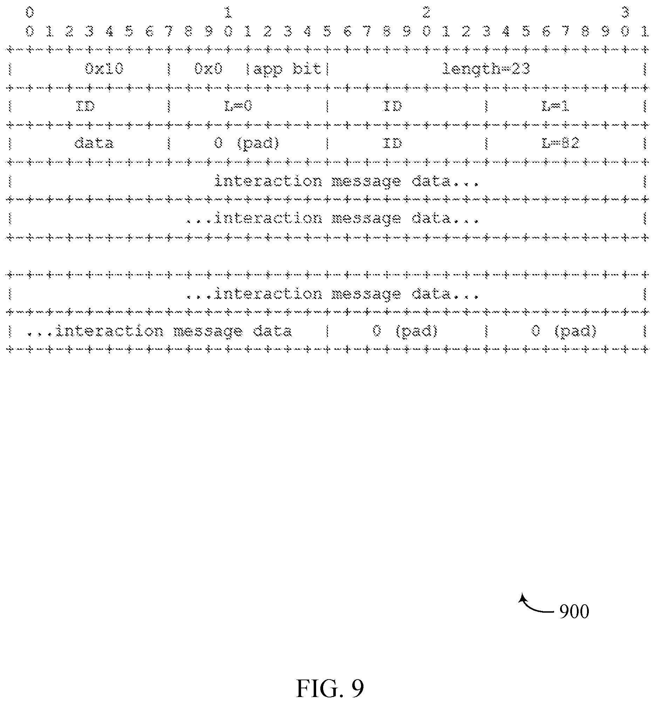

FIG. 9 illustrates an example 900 of a two-byte RTP or SRTP header extension format with an interaction message data element that supports user interaction data transportation using real-time transport protocol header extension in accordance with aspects of the present disclosure. The example 900 implements the two-byte extension format and the previously described basic interaction message payload as one of the RTP header extension elements. In the example 800, the interaction message data of 82 bytes size is transported over a two-byte generic RTP header extension mechanism (identified by profile ID 0x100 + 4 application (app) determined bits defaulting to 0x0) with overall length of 46 words. The interaction message data is the last RTP header extension element in succession of other three extension elements whereby the first extension element is empty. The RTP header extension is additionally padded with 2 bytes ensuring the RTP header extension 32-bit alignment.

In one or more implementations, the signaling of the local ID and extension mapping corresponding to the RTP header extension element of interaction message data follows the SDP signaling. In such situations, during the SDP offer/answer procedure the sender and the receiver negotiate and determine the RTP extension mapping, the local extension element ID, the Uniform Resource Identifier (URI), the direction (e.g., 'sendrecv', 'sendonly', 'recvonly', 'inactive') and the namespace (e.g., RTP session-wide or RTP media-wide) of the interaction message data extension elements transported by RTP PDUs over the session.

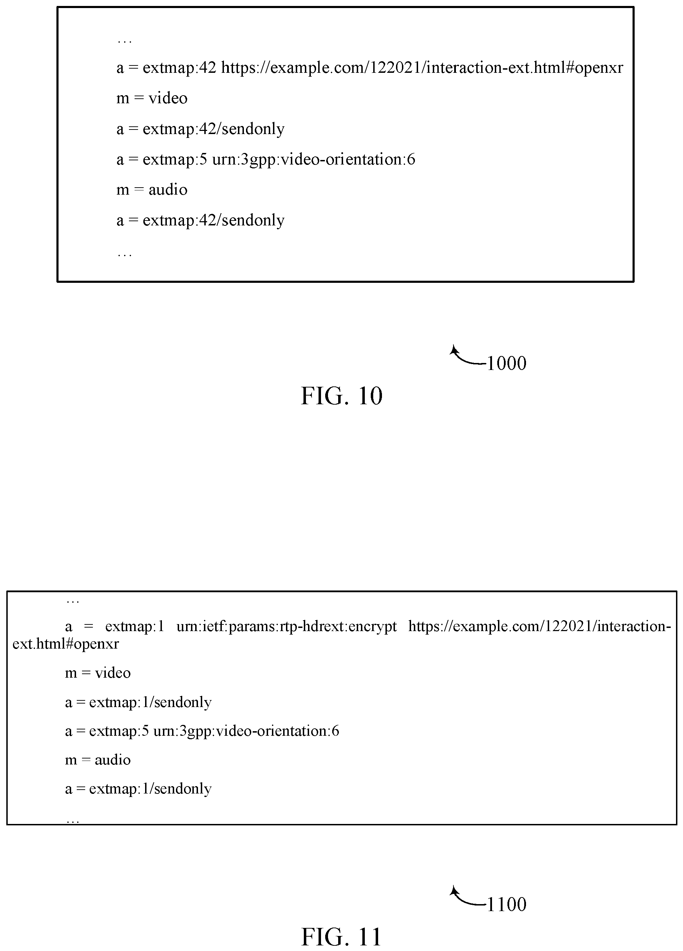

FIG. 10 illustrates an example 1000 of an SDP answer that supports user interaction data transportation using real-time transport protocol header extension in accordance with aspects of the present disclosure. The SDP answer in the example 1000 is, e.g., for the case of a two-byte generic RTP header extension mechanism mapping a local ID 42 to a URI corresponding to an OpenXR interaction message data model at the session level. The SDP answerer indicates that for both the video and audio media associated with the RTP session it will only send such interaction message data. In addition, the URI is obtained from a central registry hosting the OpenXR data model and syntax associated and mapped to the local ID 42. The SDP answer in the example 1000 also contains another extension element, i.e., a 3GPP coordination video orientation (CVO) with a precision of 6 bits active only for the video media of the RTP session.

In one or more implementations therefore, the URI of the SDP answer/offer procedure acts as a unique syntax identifier and as such the information contained in the syntax identifier field of fixed length as illustrated in FIG. 6 is not needed. In such situations, the syntax identifier field is thus need not be part of the RTP header extension payload format of an interaction message and the URI is used to determine syntax of the interaction message data.

In one or more implementations, the URI is a URN defined with IETF uniquely identifying the model and syntax of the interaction message data, whereas in other implementations the URI is registered with a central repository (e.g., 'https://example.org/122021/interaction-ext.html) that collects a plurality of models and syntaxes uniquely identifying various interaction message data formats (e.g., 'https://example.org/122021/interaction-ext.html##openxr', 'https://example.org/12202l/interaction-ext.html#thinkreality', etc.) out of which an application may select a preferred one.

In one or more implementations, as the rate of the interaction message data (e.g., 250 Hz or 1000 Hz) may differ from the rate of associated media (e.g., video @60fps and/or audio@48kHz), empty or 'dummy' RTP PDUs may be used to transport the interaction message data. In such implementations the RTP PDU contains no payload (e.g., no data) or equivalently a zero-length payload. In one or more implementations, prefixed padding may be used to ensure that the RTP PDU is 32-bit aligned.

Returning to FIG. 1, as the interaction data contains privacy-sensitive inputs recording and tracking user physical actions (e.g., head movements, gestures, touch interactions, eye movements, gaze, and orientation elements), it is of interest in one or more implementations to ensure the security of such data in transit over heterogeneous networks and terminals. In such implementations, both the integrity and confidentiality of the data is to be ensured, and as a result, the interaction message data uses both authentication and encryption.

To this end, in one or more implementations, the SRTP protocol is used instead of the RTP unsecured version to authenticate the RTP header extension transporting the interaction message data. Additionally or alternatively, where any of one-byte or two-byte generic RTP header extension mechanisms previously discussed are used to transport interaction message data as an extension element alongside other potential extension elements, the SRTP also provides interaction message data authenticity through its message authentication signature appended to the typical RTP PDU to form the SRTP PDU.

Additionally or alternatively, to further provide for the confidentiality of the interaction message data, the encryption-based SRTP header extension confidentiality mechanism of is used. This utilizes the same security procedures that SRTP applies to encrypt the SRTP payload to encrypt selected header extension elements of the SRTP header extension in conjunction with the one-byte or two-byte mechanisms for RTP previously described. Thus, during the SDP offer/answer procedure the encryption of extension elements corresponding to local IDs mapped to interaction message data can be selected and determined. This in turn provides for the extension elements being first encrypted and secondly used to generate the SRTP message signature, thus providing interaction message data integrity and confidentiality.

In one or more implementations, the encryption-based SRTP header extension confidentiality mechanism can be used together with any of one-byte or two-byte generic RTP header extension mechanisms previously described to provide a scalable and secure multiple extension elements framework to transport interaction message data alongside other potential SRTP header extension elements.

FIG. 11 illustrates an example 1100 of an SDP answer that supports user interaction data transportation using real-time transport protocol header extension in accordance with aspects of the present disclosure. The SDP answer in the example 1100 is, e.g., an SDP answer for secure RTP header extension element of interaction message data. This illustrates an example of the SDP offer/answer procedure for SRTP transport selecting the encryption of extension elements containing the interaction message data.

In the example 1100 only the interaction message data is encrypted as local ID = 1 and sent by the answerer (e.g., a UE device as a head-mounted display, an input controller etc.) with any of the session video or audio related SRTP PDUs. On other hand, the CVO extension is not encrypted but just authenticated by the SRTP message authentication signature prefixed to the PDU.

In one or more implementations, the key generation and negotiation for the SRTP header extension encryption may rely on SRTP key exchange procedure including DTLS key exchange and security parameters determination for the encryption scheme used in SRTP. Additionally or alternatively, the SDP security description (e.g.,
'a=crypto:1 AES_CM_128_HMAC_SHA1_32 \
inline:NzB4d1BINUAvLEw6UzF3WSJ+PSdFcGdUJShpX1Zj|2^2011:32'
) for SRTP keying may be used for key exchange and selection of security parameters for the encryption scheme used to secure one or more SRTP header extension elements.

In one or more implementations, the SRTP-based procedures described above to encrypt and authenticate interaction message data as SRTP header extension elements may be embedded into a WebRTC protocol stack serving an interactive application, such as an XR or CG application, over WebRTC. In such implementations the SDP signaling, key exchange and security parameters establishment will be performed based on DTLS key exchange as part of the WebRTC session establishment procedure. Such one or more implementations benefit the privacy of the interaction message data by encryption and authentication thus protecting the RTP header extension selected elements against eavesdropping or tracking by means of man-in-the-middle or network attacks over the WebRTC protocol stack attack surface, e.g., untrusted, or rogue TURN relaying servers.

In one or more implementations, as the rate of the interaction message data (e.g., 250 Hz or 1000 Hz) may differ from the rate of associated media (e.g., video @60fps and/or audio@48kHz), empty or 'dummy' SRTP PDUs may be used to transport securely the interaction message data. In such situations, SRTP PDU contains no payload or equivalently a zero-length payload. In one or more implementations, prefixed padding may be used to ensure that the SRTP PDU is aligned (e.g., 32-bit aligned).

Accordingly, the techniques discussed herein provide for the transport of the small-size real-time interaction data specific to interactive applications (e.g., XR/CG) over the RTP header extension elements as standalone or together with other header extension elements, and the authentication and encryption of the header extension element transporting the interaction data.

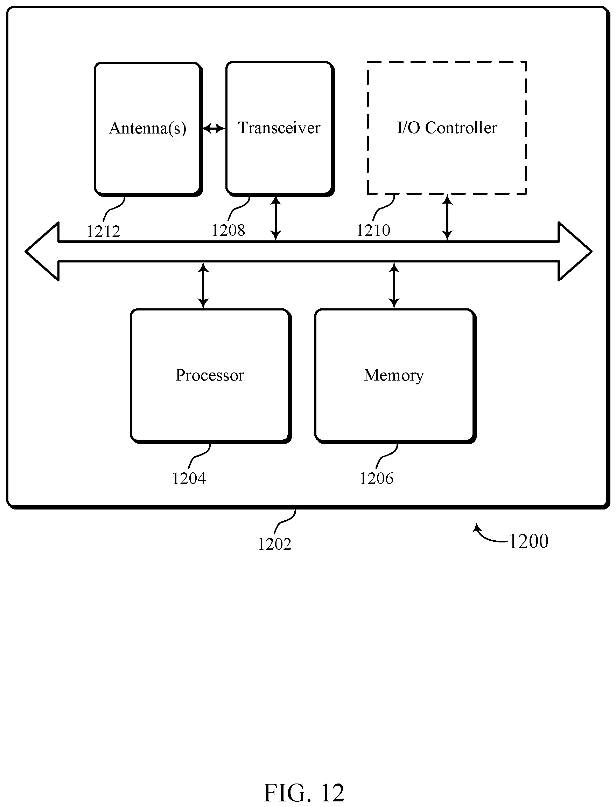

FIG. 12 illustrates an example of a block diagram 1200 of a device 1202 that supports user interaction data transportation using real-time transport protocol header extension in accordance with aspects of the present disclosure. The device 1202 may be an example of UE 104 as described herein. The device 1202 may support wireless communication with one or more network entities 102, UEs 104, or any combination thereof. The device 1202 may include components for bi-directional communications including components for transmitting and receiving communications, such as a processor 1204, a memory 1206, a transceiver 1208, and an I/O controller 1210. These components may be in electronic communication or otherwise coupled (e.g., operatively, communicatively, functionally, electronically, electrically) via one or more interfaces (e.g., buses).

The processor 1204, the memory 1206, the transceiver 1208, or various combinations thereof or various components thereof may be examples of means for performing various aspects of the present disclosure as described herein. For example, the processor 1204, the memory 1206, the transceiver 1208, or various combinations or components thereof may support a method for performing one or more of the operations described herein.

In some implementations, the processor 1204, the memory 1206, the transceiver 1208, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 1204 and the memory 1206 coupled with the processor 1204 may be configured to perform one or more of the functions described herein (e.g., executing, by the processor 1204, instructions stored in the memory 1206).

For example, the processor 1204 may support wireless communication at the device 1202 in accordance with examples as disclosed herein. Processor 1204 may be configured as or otherwise support to: sample one or more physical device interactions by a user to obtain interaction data corresponding to action inputs; generate one or more pose information elements from the interaction data; include the one or more pose information elements in one or more transport header extensions of a real-time transport protocol data unit corresponding to a payload of at least one media component; transmit, to a remote device, the real-time transport protocol data unit.

Additionally or alternatively, the processor 1204 may be configured to or otherwise support: where the processor is further configured to cause the apparatus to encrypt the one or more transport header extensions using one or both of a TLS procedure and a DTLS procedure; to: generate, based at least in part on the one or more transport header extensions, a message authentication signature; and append the message authentication signature to the real-time transport protocol data unit; where the apparatus comprises a UE; to generate the one or more pose information elements based on an interaction data format syntax that includes one or more of a syntax protocol identifier, an interaction short message type, an interaction short message timestamp, an interaction short message raw data length, or an interaction short message raw data payload; where the payload of the real-time transport protocol data unit contains no data; where a frequency of generating pose information elements is based on a processing mode indicating one of a periodic interaction short message and an event-based interaction short message; to use an event threshold to determine to generate the one or more pose information elements when the processing mode indicates the event-based interaction short message.

For example, the processor 1204 may support wireless communication at the device 1202 in accordance with examples as disclosed herein. Processor 1204 may be configured as or otherwise support a means for sampling one or more physical device interactions by a user to obtain interaction data corresponding to action inputs; generating one or more pose information elements from the interaction data; including the one or more pose information elements in one or more transport header extensions of a real-time transport protocol data unit corresponding to a payload of at least one media component; and transmitting, to a remote device, the real-time transport protocol data unit.

Additionally or alternatively, the processor 1204 may be configured to or otherwise support: encrypting the one or more transport header extensions using one or both of a TLS procedure and a DTLS procedure; generating, based at least in part on the one or more transport header extensions, a message authentication signature; and appending the message authentication signature to the real-time transport protocol data unit; generating the one or more pose information elements based on an interaction data format syntax that includes one or more of a syntax protocol identifier, an interaction short message type, an interaction short message timestamp, an interaction short message raw data length, or an interaction short message raw data payload; where the payload of the real-time transport protocol data unit contains no data; where a frequency of generating pose information elements is based on a processing mode indicating one of a periodic interaction short message and an event-based interaction short message; using an event threshold to determine to generate the one or more pose information elements when the processing mode indicates the event-based interaction short message. The processor 1204 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 1204 may be configured to operate a memory array using a memory controller. In some other implementations, a memory controller may be integrated into the processor 1204. The processor 1204 may be configured to execute computer-readable instructions stored in a memory (e.g., the memory 1206) to cause the device 1202 to perform various functions of the present disclosure.

The processor 1204 of the device 1202, such as a UE 104, may support wireless communication in accordance with examples as disclosed herein. The processor 1204 includes at least one controller coupled with at least one memory and configured to cause the processor to: sample one or more physical device interactions by a user to obtain interaction data corresponding to action inputs; generate one or more pose information elements from the interaction data inputs; include the one or more pose information elements in one or more transport header extensions of a real-time transport protocol data unit corresponding to a payload of at least one media component; transmit, to a remote device, the real-time transport protocol data unit.

The memory 1206 may include random access memory (RAM) and read-only memory (ROM). The memory 1206 may store computer-readable, computer-executable code including instructions that, when executed by the processor 1204 cause the device 1202 to perform various functions described herein. The code may be stored in a non-transitory computer-readable medium such as system memory or another type of memory. In some implementations, the code may not be directly executable by the processor 1204 but may cause a computer (e.g., when compiled and executed) to perform functions described herein. In some implementations, the memory 1206 may include, among other things, a basic I/O system (BIOS) which may control basic hardware or software operation such as the interaction with peripheral components or devices.

The I/O controller 1210 may manage input and output signals for the device 1202. The I/O controller 1210 may also manage peripherals not integrated into the device 1202. In some implementations, the I/O controller 1210 may represent a physical connection or port to an external peripheral. In some implementations, the I/O controller 1210 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 1210 may be implemented as part of a processor, such as the processor 1204. In some implementations, a user may interact with the device 1202 via the I/O controller 1210 or via hardware components controlled by the I/O controller 1210.

In some implementations, the device 1202 may include a single antenna 1212. However, in some other implementations, the device 1202 may have more than one antenna 1212 (i.e., multiple antennas), including multiple antenna panels or antenna arrays, which may be capable of concurrently transmitting or receiving multiple wireless transmissions. The transceiver 1208 may communicate bi-directionally, via the one or more antennas 1212, wired, or wireless links as described herein. For example, the transceiver 1208 may represent a wireless transceiver and may communicate bi-directionally with another wireless transceiver. The transceiver 1208 may also include a modem to modulate the packets, to provide the modulated packets to one or more antennas 1212 for transmission, and to demodulate packets received from the one or more antennas 1212.

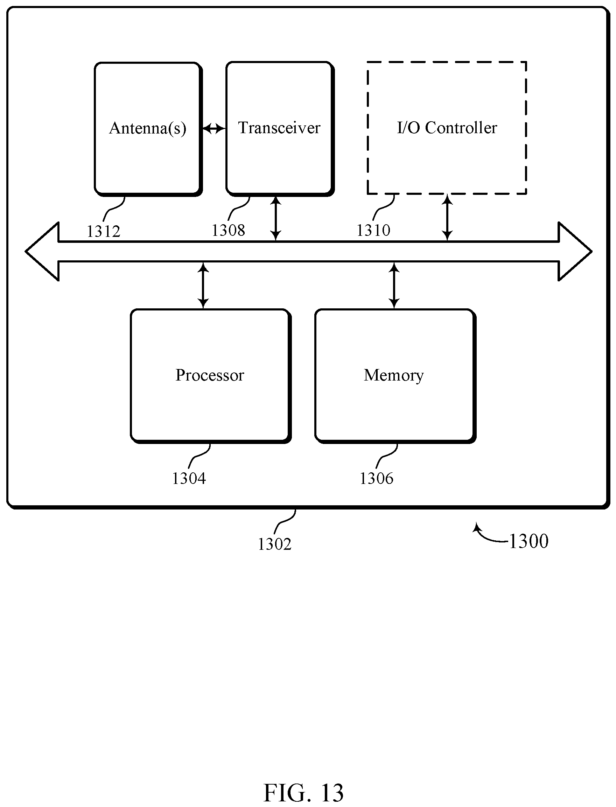

FIG. 13 illustrates an example of a block diagram 1300 of a device 1302 that supports user interaction data transportation using real-time transport protocol header extension in accordance with aspects of the present disclosure. The device 1302 may be an example of a network entity 102 as described herein. The device 1302 may support wireless communication with one or more network entities 102, UEs 104, or any combination thereof. The device 1302 may include components for bi-directional communications including components for transmitting and receiving communications, such as a processor 1304, a memory 1306, a transceiver 1308, and an I/O controller 1310. These components may be in electronic communication or otherwise coupled (e.g., operatively, communicatively, functionally, electronically, electrically) via one or more interfaces (e.g., buses).

The processor 1304, the memory 1306, the transceiver 1308, or various combinations thereof or various components thereof may be examples of means for performing various aspects of the present disclosure as described herein. For example, the processor 1304, the memory 1306, the transceiver 1308, or various combinations or components thereof may support a method for performing one or more of the operations described herein.

In some implementations, the processor 1304, the memory 1306, the transceiver 1308, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 1304 and the memory 1306 coupled with the processor 1304 may be configured to perform one or more of the functions described herein (e.g., executing, by the processor 1304, instructions stored in the memory 1306).

For example, the processor 1304 may support wireless communication at the device 1302 in accordance with examples as disclosed herein. Processor 1304 may be configured as or otherwise support to: receive, from a UE, a real-time transport protocol data unit corresponding to a payload of at least one media component and one or more pose information elements included in one or more transport header extensions of the real-time transport protocol data unit; process the one or more pose information elements to obtain a graphically rendered interaction and a graphical rendering output; transmit, to the UE, the graphical rendering output and the graphically rendered interaction.

Additionally or alternatively, the processor 1304 may be configured to or otherwise support: to: determine the graphically rendered interaction data based in part at least on one or more of a syntax protocol identifier, an interaction short message type, an interaction short message timestamp, an interaction short message raw data length, or an interaction short message raw data payload comprised in each of one or more interaction short messages that include the pose information elements, and to generate the graphical rendering output based on the graphically rendered interaction data; where to determine the graphically rendered interaction data further comprises at least one of: a selection of one of the interaction short messages or an interpolation of the one or more interaction short messages; to receive the interaction data based at least in part on an out-of-band session description signaling determining a session configuration for reception of the real-time transport protocol data unit containing the one or more interaction data, and transmission of the graphically rendered interaction and the graphical rendering output; to decrypt the one or more transport header extensions using one or both of a TLS procedure and a DTLS procedure; to: authenticate the one or more transport header extensions based at least in part on a message authentication signature appended to the real-time transport protocol data unit; where the payload of the real-time transport protocol data unit contains no data.

For example, the processor 1304 may support wireless communication at the device 1302 in accordance with examples as disclosed herein. Processor 1304 may be configured as or otherwise support a means for receiving, from a UE, a real-time transport protocol data unit corresponding to a payload of at least one media component and one or more pose information elements included in one or more transport header extensions of the real-time transport protocol data unit; processing the one or more pose information elements to obtain a graphically rendered interaction and a graphical rendering output; and transmitting, to the UE, the graphical rendering output and the graphically rendered interaction.

Additionally or alternatively, the processor 1304 may be configured to or otherwise support: determining the graphically rendered interaction data based in part at least on one or more of a syntax protocol identifier, an interaction short message type, an interaction short message timestamp, an interaction short message raw data length, or an interaction short message raw data payload comprised in each of one or more interaction short messages that include the pose information elements; and generating the graphical rendering output based on the graphically rendered interaction data; where determining the graphically rendered interaction data comprises at least one of: a selection of one of the interaction short messages or an interpolation of the one or more interaction short messages; where the interaction data is received based at least in part on an out-of-band session description signaling determining a session configuration for reception of the real-time transport protocol data unit containing the one or more interaction data, transmission of the graphically rendered interaction and the graphical rendering output; decrypting the one or more transport header extensions using one or both of a TLS procedure and a DTLS procedure; authenticating the one or more transport header extensions based at least in part on a message authentication signature appended to the real-time transport protocol data unit; where the payload of the real-time transport protocol data unit contains no data.

The processor 1304 of the device 1302, such as a network entity 102, may support wireless communication in accordance with examples as disclosed herein. The processor 1304 includes at least one controller coupled with at least one memory and configured to cause the processor to: receive, from a UE, a real-time transport protocol data unit corresponding to a payload of at least one media component and one or more pose information elements included in one or more transport header extensions of the real-time transport protocol data unit; process the one or more pose information elements to obtain a graphically rendered interaction and a graphical rendering output; transmit, to the UE, the graphical rendering output and the graphically rendered interaction.

The processor 1304 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 1304 may be configured to operate a memory array using a memory controller. In some other implementations, a memory controller may be integrated into the processor 1304. The processor 1304 may be configured to execute computer-readable instructions stored in a memory (e.g., the memory 1306) to cause the device 1302 to perform various functions of the present disclosure.

The memory 1306 may include random access memory (RAM) and read-only memory (ROM). The memory 1306 may store computer-readable, computer-executable code including instructions that, when executed by the processor 1304 cause the device 1302 to perform various functions described herein. The code may be stored in a non-transitory computer-readable medium such as system memory or another type of memory. In some implementations, the code may not be directly executable by the processor 1304 but may cause a computer (e.g., when compiled and executed) to perform functions described herein. In some implementations, the memory 1306 may include, among other things, a basic I/O system (BIOS) which may control basic hardware or software operation such as the interaction with peripheral components or devices.

The I/O controller 1310 may manage input and output signals for the device 1302. The I/O controller 1310 may also manage peripherals not integrated into the device 1302. In some implementations, the I/O controller 1310 may represent a physical connection or port to an external peripheral. In some implementations, the I/O controller 1310 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 1310 may be implemented as part of a processor, such as the processor 1304. In some implementations, a user may interact with the device 1302 via the I/O controller 1310 or via hardware components controlled by the I/O controller 1310.

In some implementations, the device 1302 may include a single antenna 1312. However, in some other implementations, the device 1302 may have more than one antenna 1312 (i.e., multiple antennas), including multiple antenna panels or antenna arrays, which may be capable of concurrently transmitting or receiving multiple wireless transmissions. The transceiver 1308 may communicate bi-directionally, via the one or more antennas 1312, wired, or wireless links as described herein. For example, the transceiver 1308 may represent a wireless transceiver and may communicate bi-directionally with another wireless transceiver. The transceiver 1308 may also include a modem to modulate the packets, to provide the modulated packets to one or more antennas 1312 for transmission, and to demodulate packets received from the one or more antennas 1312.

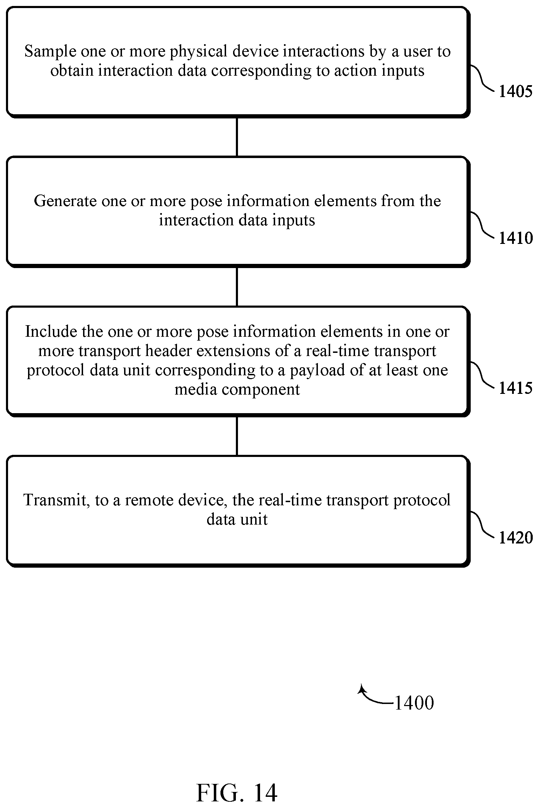

FIG. 14 illustrates a flowchart of a method 1400 that supports user interaction data transportation using real-time transport protocol header extension in accordance with aspects of the present disclosure. The operations of the method 1400 may be implemented by a device or its components as described herein. For example, the operations of the method 1400 may be performed by a UE 104 as described with reference to FIGs. 1 through 13. In some implementations, the device may execute a set of instructions to control the function elements of the device to perform the described functions. Additionally, or alternatively, the device may perform aspects of the described functions using special-purpose hardware.

At 1405, the method may include sampling one or more physical device interactions by a user to obtain interaction data corresponding to action inputs. The operations of 1405 may be performed in accordance with examples as described herein. In some implementations, aspects of the operations of 1405 may be performed by a device as described with reference to FIG. 1.

At 1410, the method may include generating one or more pose information elements from the interaction data inputs. The operations of 1410 may be performed in accordance with examples as described herein. In some implementations, aspects of the operations of 1410 may be performed by a device as described with reference to FIG. 1.

At 1415, the method may include including the one or more pose information elements in one or more transport header extensions of a real-time transport protocol data unit corresponding to a payload of at least one media component. The operations of 1415 may be performed in accordance with examples as described herein. In some implementations, aspects of the operations of 1415 may be performed by a device as described with reference to FIG. 1.

At 1420, the method may include transmitting, to a remote device, the real-time transport protocol data unit. The operations of 1420 may be performed in accordance with examples as described herein. In some implementations, aspects of the operations of 1420 may be performed by a device as described with reference to FIG. 1.

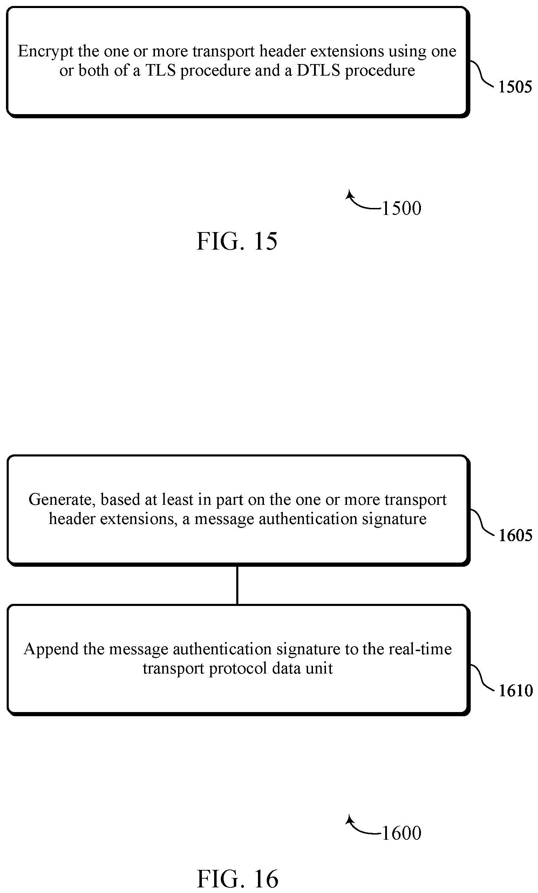

FIG. 15 illustrates a flowchart of a method 1500 that supports user interaction data transportation using real-time transport protocol header extension in accordance with aspects of the present disclosure. The operations of the method 1500 may be implemented by a device or its components as described herein. For example, the operations of the method 1500 may be performed by a UE 104 as described with reference to FIGs. 1 through 13. In some implementations, the device may execute a set of instructions to control the function elements of the device to perform the described functions. Additionally, or alternatively, the device may perform aspects of the described functions using special-purpose hardware.

At 1505, the method may include encrypting the one or more transport header extensions using one or both of a TLS procedure and a DTLS procedure. The operations of 1505 may be performed in accordance with examples as described herein. In some implementations, aspects of the operations of 1505 may be performed by a device as described with reference to FIG. 1.

FIG. 16 illustrates a flowchart of a method 1600 that supports user interaction data transportation using real-time transport protocol header extension in accordance with aspects of the present disclosure. The operations of the method 1600 may be implemented by a device or its components as described herein. For example, the operations of the method 1600 may be performed by a UE 104 as described with reference to FIGs. 1 through 13. In some implementations, the device may execute a set of instructions to control the function elements of the device to perform the described functions. Additionally, or alternatively, the device may perform aspects of the described functions using special-purpose hardware.

At 1605, the method may include generating, based at least in part on the one or more transport header extensions, a message authentication signature. The operations of 1605 may be performed in accordance with examples as described herein. In some implementations, aspects of the operations of 1605 may be performed by a device as described with reference to FIG. 1.

At 1610, the method may include appending the message authentication signature to the real-time transport protocol data unit. The operations of 1610 may be performed in accordance with examples as described herein. In some implementations, aspects of the operations of 1610 may be performed by a device as described with reference to FIG. 1.

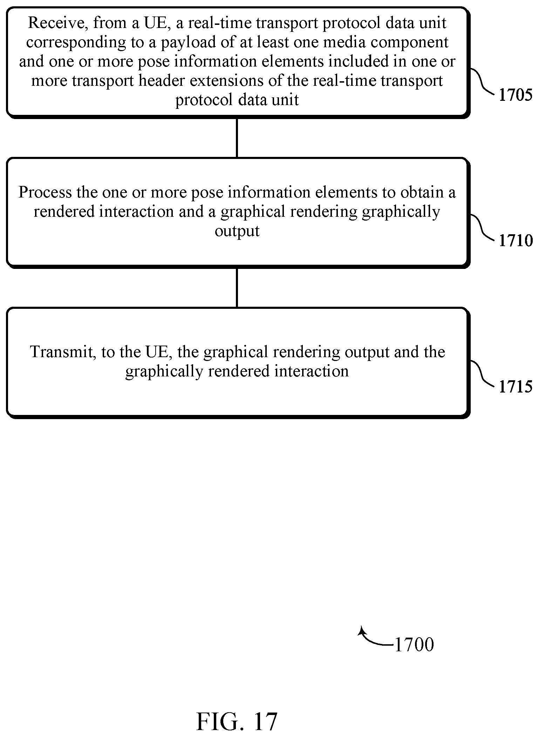

FIG. 17 illustrates a flowchart of a method 1700 that supports user interaction data transportation using real-time transport protocol header extension in accordance with aspects of the present disclosure. The operations of the method 1700 may be implemented by a device or its components as described herein. For example, the operations of the method 1700 may be performed by a network entity 102 as described with reference to FIGs. 1 through 13. In some implementations, the device may execute a set of instructions to control the function elements of the device to perform the described functions. Additionally, or alternatively, the device may perform aspects of the described functions using special-purpose hardware.

At 1705, the method may include receiving, from a UE, a real-time transport protocol data unit corresponding to a payload of at least one media component and one or more pose information elements included in one or more transport header extensions of the real-time transport protocol data unit. The operations of 1705 may be performed in accordance with examples as described herein. In some implementations, aspects of the operations of 1705 may be performed by a device as described with reference to FIG. 1.

At 1710, the method may include processing the one or more pose information elements to obtain a rendered interaction and a graphical rendering graphically output. The operations of 1710 may be performed in accordance with examples as described herein. In some implementations, aspects of the operations of 1710 may be performed by a device as described with reference to FIG. 1.

At 1715, the method may include transmitting, to the UE, the graphical rendering output and the graphically rendered interaction. The operations of 1715 may be performed in accordance with examples as described herein. In some implementations, aspects of the operations of 1715 may be performed by a device as described with reference to FIG. 1.

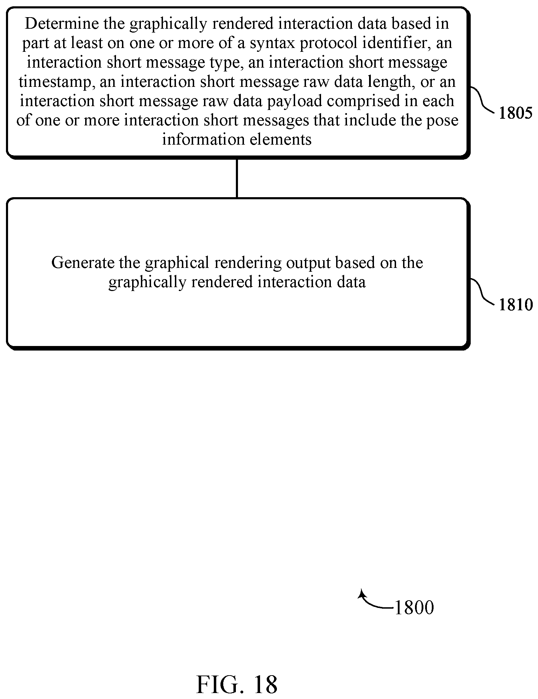

FIG. 18 illustrates a flowchart of a method 1800 that supports user interaction data transportation using real-time transport protocol header extension in accordance with aspects of the present disclosure. The operations of the method 1800 may be implemented by a device or its components as described herein. For example, the operations of the method 1800 may be performed by a network entity 102 as described with reference to FIGs. 1 through 13. In some implementations, the device may execute a set of instructions to control the function elements of the device to perform the described functions. Additionally, or alternatively, the device may perform aspects of the described functions using special-purpose hardware.

At 1805, the method may include obtaining, from the one or more interaction short messages, a syntax protocol identifier. The operations of 1805 may be performed in accordance with examples as described herein. In some implementations, aspects of the operations of 1805 may be performed by a device as described with reference to FIG. 1.

At 1810, the method may include processing the one or more interaction short messages to obtain the interaction response based at least in part on the syntax protocol identifier. The operations of 1810 may be performed in accordance with examples as described herein. In some implementations, aspects of the operations of 1810 may be performed by a device as described with reference to FIG. 1.

It should be noted that the methods described herein describes possible implementations, and that the operations and the steps may be rearranged or otherwise modified and that other implementations are possible. Further, aspects from two or more of the methods may be combined.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor.

Any connection may be properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of" or "one or both of") indicates an inclusive list such that, for example, a list of at least one of A, B, or C means A or B or C or AB or AC or BC or ABC (i.e., A and B and C). Similarly, a list of at least one of A; B; or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on. Further, as used herein, including in the claims, a "set" may include one or more elements.

The terms "transmitting," "receiving," or "communicating," when referring to a network entity, may refer to any portion of a network entity (e.g., a base station, a CU, a DU, a RU) of a RAN communicating with another device (e.g., directly or via one or more other network entities).

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form to avoid obscuring the concepts of the described example.

The description herein is provided to enable a person having ordinary skill in the art to make or use the disclosure. Various modifications to the disclosure will be apparent to a person having ordinary skill in the art without departing from the scope of the invention. Thus, the disclosure is not limited to the examples and designs described herein but is to be accorded the broadest scope consistent with the scope of the invention as defined by the appended claims.

## Claims

1. A user equipment, UE, (104) for wireless communication, the UE (104) comprising:
at least one memory (1206); and
at least one processor (1204) coupled with the at least one memory (1206) and configured to cause the UE (104) to:
sample (1405) one or more physical device interactions by a user to obtain interaction data corresponding to action inputs;
generate (1410) one or more pose information elements from the interaction data;
include (1415) the one or more pose information elements in one or more transport header extensions of a real-time transport protocol, RTP, data unit corresponding to a payload of at least one media component, wherein the at least one processor (1204) is configured to cause the UE (104) to encrypt a set of one or more extension elements of (1505) the one or more transport header extensions based on at least one of a transport layer security, TLS, procedure or a datagram transport layer security, DTLS, procedure; and
transmit (1420), to a remote device, the RTP data unit including the encrypted one or more transport header extensions.

2. The UE (104) of claim 1, wherein the at least one processor (1204) is configured to cause the UE (104) to
authenticate the one or more transport header extensions using secure real-time transport protocol, SRTP, by: generating based at least in part on the one or more transport header extensions, a message authentication signature; and
appending the message authentication signature to the RTP data unit.

3. The UE (104) of claim 1, wherein the at least one processor (1204) is configured to cause the UE (104) to generate the one or more pose information elements based on an interaction data format syntax that includes at least one of a syntax protocol identifier, an interaction short message type, interaction short message action inputs data an interaction short message timestamp, an interaction short message raw data length, or an interaction short message raw data payload.

4. The UE (104) of claim 1, wherein the payload of the RTP data unit contains no data.

5. The UE (104) of claim 1, wherein a frequency of generating pose information elements is based on a processing mode indicating periodic RTP header extension generation for pose information.

6. The UE (104) of claim 5, wherein the at least one processor (1204) is configured to cause the UE (104) to use an event threshold to determine to generate the one or more pose information elements when the processing mode indicates the event-based interaction short message.

7. A network entity (102) for wireless communication, the network entity (102) comprising:
at least one memory (1306); and
at least one processor (1304) coupled with the at least one memory (1306) and configured to cause the network entity (102) to:
receive (1705), from a user equipment, UE, (104) a real-time transport protocol, RTP, data unit corresponding to a payload of at least one media component and one or more pose information elements included in one or more transport header extensions of the RTP data unit, wherein a set of one or more extension elements of the one or more transport header extensions are encrypted using at least one of a transport layer security, TLS, procedure or a datagram transport layer security, DTLS, procedure;
decrypt the one or more transport header extensions using the at least one of a TLS procedure or a DTLS procedure;
process (1710) the one or more pose information elements to obtain a graphically rendered interaction and a graphical rendering output; and
transmit (1715), to the UE (104), the graphical rendering output and the graphically rendered interaction.

8. The network entity (102) of claim 7, wherein the at least one processor (1304) is configured to cause the network entity (102):
to determine the graphically rendered interaction data based in part at least on at least one of a syntax protocol identifier, an interaction short message type, interaction short message action inputs data, an interaction short message timestamp, an interaction short message raw data length, or an interaction short message raw data payload comprised in each of one or more interaction short messages that include the pose information elements, and
to generate the graphical rendering output based on the graphically rendered interaction data.

9. The network entity (102) of claim 8, wherein to determine the graphically rendered interaction data, the at least one processor (1304) is configured to cause the network entity (102) to select one of the interaction short messages or an interpolation of the one or more interaction short messages.

10. The network entity (102) of claim 8, wherein the at least one processor (1304) is configured to cause the network entity (102) to receive the interaction data based at least in part on an out-of-band session description protocol, SDP, signaling determining a session configuration for reception of the RTP data unit containing the one or more interaction data, and transmission of the graphically rendered interaction and the graphical rendering output.

11. A method performed by a user equipment, UE, (104), the method comprising:
sampling (1405) one or more physical device interactions by a user to obtain interaction data corresponding to action inputs;
generating (1410) one or more pose information elements from the interaction data;
including (1415) the one or more pose information elements in one or more transport header extensions of a real-time transport protocol, RTP, data unit corresponding to a payload of at least one media component;
encrypting (1505) a set of one or more extension elements of the one or more transport header extensions based on at least one of a transport layer security, TLS, procedure or a datagram transport layer security, DTLS, procedure; and
transmitting (1420), to a remote device, the RTP data unit including the encrypted one or more transport header extensions.

12. A method performed by a network entity (102), the method comprising:
receiving (1705), from a user equipment, UE, (104) a real-time transport protocol, RTP, data unit corresponding to a payload of at least one media component and one or more pose information elements included in one or more transport header extensions of the RTP data unit, wherein a set of one or more extension elements of the one or more transport header extensions are encrypted using at least one of a transport layer security, TLS, procedure or a datagram transport layer security, DTLS, procedure; decrypting the one or more transport header extensions using the at least one of a TLS procedure or a DTLS procedure; processing (1710) the one or more pose information elements to obtain a graphically rendered interaction and a graphical rendering output; and transmitting (1715), to the UE (104), the graphical rendering output and the graphically rendered interaction.

13. A computer program comprising instructions that, when executed by a processor, cause the processor to carry out a method according to claim 11.

14. A computer program comprising instructions that, when executed by a processor, cause the processor to carry out a method according to claim 12.

## Patentansprüche

1. Benutzergerät, UE, (104) für die drahtlose Kommunikation, wobei das UE (104) umfasst:
mindestens einen Speicher (1206); und
mindestens einen Prozessor (1204), der mit dem mindestens einen Speicher (1206) gekoppelt und dazu konfiguriert ist, zu bewirken, dass das UE (104):
eine oder mehrere physische Vorrichtungsinteraktionen eines Benutzers abfragt (1405), um Interaktionsdaten zu erhalten, die Aktions-Eingaben entsprechen;
aus den Interaktionsdaten ein oder mehrere Lageinformationselemente erzeugt (1410);
das eine oder die mehreren Lageinformationselemente in eine oder mehrere Transport-Header-Erweiterungen einer Dateneinheit des Echtzeit-Transportprotokolls, RTP, einbindet (1415), die einer Nutzlast von mindestens einer Medienkomponente entspricht, wobei der mindestens eine Prozessor (1204) dazu konfiguriert ist, zu bewirken, dass das UE (104) einen Satz von einem oder mehreren Erweiterungselementen (1505) der einen oder mehreren Transport-Header-Erweiterungen basierend auf mindestens einem von einem Transport Layer Security, TLS, -Verfahren oder einem Datagram Transport Layer Security, DTLS, -Verfahren verschlüsselt; und
die RTP-Dateneinheit einschließlich der verschlüsselten einen oder mehreren Transport-Header-Erweiterung(en) an eine entfernte Vorrichtung überträgt (1420).

2. UE (104) nach Anspruch 1, wobei der mindestens eine Prozessor (1204) dazu konfiguriert ist, zu bewirken, dass das UE (104) die eine oder die mehreren Transport-Header-Erweiterungen unter Verwendung des Secure Real-Time Transport Protocol, SRTP authentifiziert, durch:
Erzeugen, zumindest teilweise basierend auf der einen oder den mehreren Transport-Header-Erweiterungen, einer Nachrichtenauthentifizierungssignatur; und
Anhängen der Nachrichtenauthentifizierungssignatur an die RTP-Dateneinheit.

3. UE (104) nach Anspruch 1, wobei der mindestens eine Prozessor (1204) dazu konfiguriert ist, zu bewirken, dass das UE (104) das eine oder die mehreren Lageinformationselemente basierend auf einer Interaktionsdatenformat-Syntax erzeugt, die mindestens eines von einer Syntax-Protokollkennung, einem Interaktions-Kurznachrichtentyp, Eingabedaten für eine Interaktions-Kurznachrichtenaktion, einem Zeitstempel der Interaktions-Kurznachricht, einer Rohdatenlänge der Interaktions-Kurznachricht oder einer Rohdaten-Nutzlast der Interaktions-Kurznachricht enthält.

4. UE (104) nach Anspruch 1, wobei die Nutzlast der RTP-Dateneinheit keine Daten enthält.

5. UE (104) nach Anspruch 1, wobei eine Häufigkeit der Erzeugung von Lageinformationselementen auf einem Verarbeitungsmodus basiert, der die periodische Erzeugung von RTP-Header-Erweiterungen für Lageinformationen anzeigt.

6. UE (104) nach Anspruch 5, wobei der mindestens eine Prozessor (1204) dazu konfiguriert ist, zu bewirken, dass das UE (104) einen Ereignisschwellenwert verwendet, um zu bestimmen, das eine oder die mehreren Lageinformationselemente zu erzeugen, wenn der Verarbeitungsmodus die ereignisbasierte Interaktions-Kurznachricht anzeigt.

7. Netzwerkeinheit (102) für die drahtlose Kommunikation, wobei die Netzwerkeinheit (102) umfasst:
mindestens einen Speicher (1306); und
mindestens einen Prozessor (1304), der mit dem mindestens einen Speicher (1306) gekoppelt und dazu konfiguriert ist, zu bewirken, dass die Netzwerkeinheit (102):
von einem Benutzergerät, UE, (104) eine Real-Time Transport Protocol, RTP, -Dateneinheit empfängt, die einer Nutzlast mindestens einer Medienkomponente und einem oder mehreren Lageinformationselementen entspricht, die in einer oder mehreren Transport-Header-Erweiterungen der RTP-Dateneinheit enthalten sind, wobei ein Satz aus einem oder mehreren Erweiterungselementen der einen oder mehreren Transport-Header-Erweiterungen unter Verwendung von mindestens einem von einem Transport Layer Security, TLS, -Verfahren oder einem Datagram Transport Layer Security, DTLS, -Verfahren verschlüsselt wird;
die eine oder die mehreren Transport-Header-Erweiterungen unter Verwendung des mindestens einem von einem TLS-Verfahren oder einem DTLS-Verfahrens entschlüsselt;
das eine oder die mehreren Lageninformationselemente verarbeitet (1710), um eine grafisch gerenderte Interaktion und eine grafische Rendering-Ausgabe zu erhalten; und
die grafische Rendering-Ausgabe und die grafisch gerenderte Interaktion an das UE (104) überträgt (1715).

8. Netzwerkeinheit (102) nach Anspruch 7, wobei der mindestens eine Prozessor (1304) dazu konfiguriert ist, zu bewirken, dass die Netzwerkeinheit (102):
die grafisch gerenderten Interaktionsdaten zumindest teilweise basierend auf mindestens einem von einer Syntax-Protokollkennung, einem Interaktions-Kurznachrichtentyp, Eingabedaten für eine Interaktions-Kurznachrichtenaktion, einem Zeitstempel der Interaktions-Kurznachricht, einer Rohdatenlänge der Interaktions-Kurznachricht oder einer Rohdatennutzlast der Interaktions-Kurznachricht, die in jeder von einer oder mehreren Interaktions-Kurznachrichten umfasst sind, die die Lageinformationselemente enthalten, bestimmt, und
die grafische Rendering-Ausgabe basierend auf den grafisch gerenderten Interaktionsdaten erzeugt.

9. Netzwerkeinheit (102) nach Anspruch 8, wobei der mindestens eine Prozessor (1304) zum Bestimmen der grafisch gerenderten Interaktionsdaten dazu konfiguriert ist, zu bewirken, dass die Netzwerkeinheit (102) eine der Interaktions-Kurznachrichten oder eine Interpolation der einen oder mehreren Interaktions-Kurznachrichten auswählt.

10. Netzwerkeinheit (102) nach Anspruch 8, wobei der mindestens eine Prozessor (1304) dazu konfiguriert ist, zu bewirken, dass er die Netzwerkeinheit (102) die Interaktionsdaten zumindest teilweise basierend auf einem Out-of-Band-Sitzungsbeschreibungsprotokoll, SDP, empfängt, das die Bestimmung einer Sitzungskonfiguration für den Empfang der RTP-Dateneinheit, die eine oder mehrere Interaktionsdaten enthält, und die Übertragung der grafisch gerenderten Interaktion und der grafischen Rendering-Ausgabe signalisiert.

11. Verfahren, das von einem Benutzergerät, UE, (104) ausgeführt wird, wobei das Verfahren umfasst:
Abfragen (1405) einer oder mehrerer physische Vorrichtungsinteraktionen durch einen Benutzer, um Interaktionsdaten zu erhalten, die Aktions-Eingaben entsprechen;
Erzeugen (1410) eines oder mehrerer Lageinformationselemente aus den Interaktionsdaten;
Einbinden (1415) des einen oder der mehreren Lageinformationselemente in eine oder mehrere Transport-Header-Erweiterungen einer Dateneinheit des Echtzeit-Transportprotokolls, RTP, die einer Nutzlast mindestens einer Medienkomponente entspricht;
Verschlüsseln (1505) eines Satzes aus einem oder mehreren Erweiterungselementen der einen oder mehreren Transport-Header-Erweiterungen basierend auf mindestens einem von einem Transport Layer Security, TLS, -Verfahrens oder einem Datagram Transport Layer Security, DTLS, - Verfahrens; und
Übertragen (1420) der RTP-Dateneinheit einschließlich der verschlüsselten einen oder mehreren Transport-Header-Erweiterungen an eine entfernte Vorrichtung.

12. Verfahren, das von einer Netzwerkeinheit (102) ausgeführt wird, wobei das Verfahren umfasst:
Empfangen (1705), von einem Benutzergerät, UE, (104), einer Dateneinheit des Echtzeit-Transportprotokolls, RTP, die einer Nutzlast mindestens einer Medienkomponente entspricht, und einem oder mehreren Lageinformationselementen, die in einer oder mehreren Transport-Header-Erweiterungen der RTP-Dateneinheit enthalten sind, wobei ein Satz aus einem oder mehreren Erweiterungselementen der einen oder mehreren Transport-Header-Erweiterungen unter Verwendung von mindestens einem von einem Transport Layer Security, TLS, -Verfahren oder einem Datagram Transport Layer Security, DTLS, -Verfahren verschlüsselt wird;
Entschlüsseln der einen oder mehreren Transport-Header-Erweiterungen unter Verwendung des mindestens einen von einem TLS-Verfahren oder DTLS-Verfahren;
Verarbeiten (1710) der einen oder mehreren Lageinformationselemente, um eine grafisch gerenderte Interaktion und eine grafische Rendering-Ausgabe zu erhalten; und
Übertragen (1715) der grafischen Rendering-Ausgabe und der grafisch gerenderten Interaktion an das UE (104).

13. Computerprogramm, das Anweisungen umfasst, die bewirken, wenn sie von einem Prozessor ausgeführt werden, dass der Prozessor ein Verfahren nach Anspruch 11 durchführt.

14. Computerprogramm, das Anweisungen umfasst, die bewirken, wenn sie von einem Prozessor ausgeführt werden, dass der Prozessor ein Verfahren nach Anspruch 12 durchführt.

## Revendications

1. Équipement utilisateur, UE, (104) destiné à la communication sans fil, l'UE (104) comprenant :
au moins une mémoire (1206) ; et
au moins un processeur (1204) couplé à l'au moins une mémoire (1206) et configuré pour amener l'UE (104) à :
échantillonner (1405) une ou plusieurs interactions physiques d'un utilisateur avec un dispositif afin d'obtenir des données d'interaction correspondant à des entrées d'action ;
générer (1410) un ou plusieurs éléments d'information de pose à partir des données d'interaction ;
inclure (1415) le ou les éléments d'information de pose dans une ou plusieurs extensions d'en-tête de transport d'une unité de données de protocole de transport en temps réel, RTP, correspondant à une charge utile d'au moins un composant multimédia, dans lequel l'au moins un processeur (1204) est configuré pour amener l'UE (104) à chiffrer un ensemble d'un ou plusieurs éléments d'extension de (1505) la ou des extensions d'en-tête de transport sur la base d'au moins l'une parmi une procédure de sécurité de la couche de transport, TLS, ou une procédure de sécurité de la couche de transport par datagrammes, DTLS ; et
transmettre (1420), à un dispositif distant, l'unité de données RTP comprenant la ou les extensions d'en-tête de transport chiffrées.

2. UE (104) selon la revendication 1, dans lequel l'au moins un processeur (1204) est configuré pour amener l'UE (104) à
authentifier la ou les extensions d'en-tête de transport au moyen du protocole de transport sécurisé en temps réel, SRTP, en :
générant, sur la base, au moins en partie, de la ou des extensions d'en-tête de transport, une signature d'authentification de message ; et
en ajoutant la signature d'authentification de message à l'unité de données RTP.

3. UE (104) selon la revendication 1, dans lequel l'au moins un processeur (1204) est configuré pour amener l'UE (104) à générer le ou les éléments d'information de pose sur la base d'une syntaxe de format de données d'interaction qui comprend au moins l'un des éléments suivants : un identifiant de protocole de syntaxe, un type de message court d'interaction, des données d'entrée d'action de message court d'interaction, un horodatage de message court d'interaction, une longueur de données brutes de message court d'interaction, ou une charge utile de données brutes de message court d'interaction.

4. UE (104) selon la revendication 1, dans lequel la charge utile de l'unité de données RTP ne contient aucune donnée.

5. UE (104) selon la revendication 1, dans lequel une fréquence de génération des éléments d'information de pose est basée sur un mode de traitement indiquant une génération périodique d'extensions d'en-tête RTP pour les informations de pose.

6. UE (104) selon la revendication 5, dans lequel l'au moins un processeur (1204) est configuré pour amener l'UE (104) à utiliser un seuil d'événement pour déterminer s'il convient de générer le ou les éléments d'information de pose lorsque le mode de traitement indique le message court d'interaction basé sur un événement.

7. Entité de réseau (102) destinée à la communication sans fil, l'entité de réseau (102) comprenant :
au moins une mémoire (1306) ; et
au moins un processeur (1304) couplé à l'au moins une mémoire (1306) et configuré pour amener l'entité de réseau (102) à :
recevoir (1705), depuis un équipement utilisateur, UE, (104), une unité de données du protocole de transport en temps réel, RTP, correspondant à une charge utile d'au moins un composant multimédia et à un ou plusieurs éléments d'information de pose inclus dans une ou plusieurs extensions d'en-tête de transport de l'unité de données RTP, dans laquelle un ensemble d'un ou plusieurs éléments d'extension de la ou des extensions d'entête de transport est chiffré à l'aide d'au moins l'une parmi une procédure de sécurité de la couche de transport, TLS, et une procédure de sécurité de la couche de transport par datagrammes, DTLS ;
déchiffrer la ou les extensions d'en-tête de transport à l'aide de l'au moins une procédure parmi la procédure TLS ou la procédure DTLS ;
traiter (1710) le ou les éléments d'information de pose pour obtenir une interaction rendue graphiquement et une sortie de rendu graphique ; et
transmettre (1715), à l'UE (104), la sortie de rendu graphique et l'interaction rendue graphiquement.

8. Entité de réseau (102) selon la revendication 7, dans laquelle l'au moins un processeur (1304) est configuré pour amener l'entité de réseau (102) :
à déterminer les données d'interaction rendues graphiquement sur la base, au moins en partie, d'au moins l'un des éléments suivants : un identifiant de protocole de syntaxe, un type de message court d'interaction, des données d'entrée d'action de message court d'interaction, un horodatage de message court d'interaction, une longueur de données brutes de message court d'interaction, ou une charge utile des données brutes de message court d'interaction comprise dans chacun d'un ou plusieurs messages courts d'interaction qui incluent les éléments d'information de pose, et
à générer la sortie de rendu graphique sur la base des données d'interaction rendues graphiquement.

9. Entité de réseau (102) selon la revendication 8, dans laquelle, pour déterminer les données d'interaction rendues graphiquement, l'au moins un processeur (1304) est configuré pour amener l'entité de réseau (102) à sélectionner l'un des messages courts d'interaction ou une interpolation des un ou plusieurs messages courts d'interaction.

10. Entité de réseau (102) selon la revendication 8, dans laquelle l'au moins un processeur (1304) est configuré pour amener l'entité de réseau (102) à recevoir les données d'interaction sur la base, au moins en partie, d'une signalisation hors bande du protocole de description de session, SDP, déterminant une configuration de session pour la réception de l'unité de données RTP contenant les une ou plusieurs données d'interaction, et pour la transmission de l'interaction rendue graphiquement et de la sortie de rendu graphique.

11. Procédé mis en œuvre par un équipement utilisateur, UE, (104), le procédé comprenant :
l'échantillonnage (1405) d'une ou plusieurs interactions physiques d'un utilisateur avec un dispositif afin d'obtenir des données d'interaction correspondant à des entrées d'action ;
la génération (1410) d'un ou plusieurs éléments d'information de pose à partir des données d'interaction ;
l'inclusion (1415) du ou des éléments d'information de pose dans une ou plusieurs extensions d'en-tête de transport d'une unité de données de protocole de transport en temps réel, RTP, correspondant à une charge utile d'au moins un composant multimédia ;
le chiffrement (1505) d'un ensemble d'un ou plusieurs éléments d'extension de la ou des extensions d'en-tête de transport sur la base d'au moins l'une parmi une procédure de sécurité de la couche de transport, TLS, et une procédure de sécurité de la couche de transport par datagrammes, DTLS ; et
la transmission (1420), à un dispositif distant, de l'unité de données RTP comprenant la ou les extensions d'en-tête de transport chiffrées.

12. Procédé mis en œuvre par une entité de réseau (102), le procédé comprenant : la réception (1705), depuis un équipement utilisateur, UE, (104) d'une unité de données de protocole de transport en temps réel, RTP, correspondant à une charge utile d'au moins un composant multimédia et à un ou plusieurs éléments d'information de pose inclus dans une ou plusieurs extensions d'en-tête de transport de l'unité de données RTP, dans lequel un ensemble d'un ou plusieurs éléments d'extension de la ou des extensions d'en-tête de transport est chiffré à l'aide d'au moins l'une parmi une procédure de sécurité de la couche de transport, TLS, et une procédure de sécurité de la couche de transport par datagrammes, DTLS ; le déchiffrement de la ou des extensions d'en-tête de transport à l'aide d'au moins l'une parmi la procédure TLS et la procédure DTLS ; le traitement (1710) du ou des éléments d'information de pose afin d'obtenir une interaction rendue graphiquement et une sortie de rendu graphique ; et la transmission (1715), à l'UE (104), de la sortie de rendu graphique et de l'interaction rendue graphiquement.

13. Programme informatique comprenant des instructions qui, lorsqu'elles sont exécutées par un processeur, amènent le processeur à mettre en œuvre un procédé selon la revendication 11.

14. Programme informatique comprenant des instructions qui, lorsqu'elles sont exécutées par un processeur, amènent le processeur à mettre en œuvre un procédé selon la revendication 12.
